# EUROPEAN PATENT APPLICATION

(11) **EP 4 663 380 A1**
(43) Date of publication of application: **17.12.2025**
(21) Application number: 24182126.3
(22) Date of filing: 13.06.2024
(51) Int. Cl.: B29C 64/106, B29C 64/129, B29C 64/277, B29C 64/286, B33Y 10/00, B33Y 30/00

(54) **A METHOD FOR VOLUMETRIC 3D-PRINTING A THREE-DIMENSIONAL OBJECT BY MULTI-COLOR PHOTOPOLYMERIZATION OF A PHOTOCURABLE RESIN**

(71) Applicant: xolo GmbH, 12489 Berlin (DE)
(72) Inventor: Garmshausen, Yves, 12489 Berlin (DE)
(74) Representative: Hafner & Kohl PartmbB

(57) **Abstract**

A method for volumetric 3d-printing a three-dimensional object by multi-color photopolymerization of a photocurable resin.

## Description

### Field of invention

The invention relates to a method for volumetric 3d-printing a three-dimensional object by multi-color photopolymerization, particularly by dual-color photopolymerization, of a photocurable resin, which comprises, via at least one irradiation device, irradiating a photocurable resin within a working volume with light of a first wavelength and light of a second wavelength, different from the first wavelength, wherein the light of the first wavelength and the light of the second wavelength intersect in at least one formation zone, wherein the light of the first wavelength comprises a plurality of individual light sheets extending through the photocurable resin at at least one angle or at least two different angles relative to each other and overlapping in at least one light sheet overlapping zone, wherein the plurality of individual light sheets form a resulting light sheet.

### Background Art

Methods for volumetric 3d-printing a three-dimensional object by multi-color photopolymerization, particularly by dual-color photopolymerization, of a photocurable resin have been generally known from the prior art. Respective methods typically, comprise irradiating a photocurable resin within a working volume with light of a first wavelength and light of a second wavelength, different from the first wavelength, wherein the light of the first wavelength and the light of the second wavelength intersect in at least one formation zone. Concrete embodiments of respective 3d-printing methods comprise principles known as xolography are specified in WO 2020/245456 A1, for instance.

Due to the light absorption of the photocurable resin the light intensity decreases the further the light penetrates into the volume, causing and inhomogeneous light intensity distribution.

In connection with respective volumetric 3d-printing methods, it has been suggested that the light of the first wavelength can comprise a plurality of individual light sheets extending through the photocurable resin at at least one angle or at least two different angles relative to each other. The plurality of individual light sheets typically, overlap in at least one light sheet overlapping zone and form a resulting light sheet.

By now, the irradiation devices of known volumetric 3d-printing apparatuses which irradiation devices are used for generating the individual light sheets are configured to generate the individual light sheets forming a resulting light sheet with a (substantially) homogeneous distribution of the light intensity, particularly with respect to the height direction of the respective individual light sheets. Thus, known volumetric 3d-printing methods which comprise generating a plurality of individual light sheets extending through the photocurable resin at at least one angle or at least two different angles relative to each other typically, aim at a homogeneous distribution of the light intensity of each of the plurality of individual light sheets, particularly with respect to the height direction of the respective individual light sheets, which also means that known volumetric 3d-printing methods implement resulting light sheets aiming at a homogenous distribution of the intensity of the light of the first wavelength throughout the working volume.

A possible drawback of employing a resulting light sheet aiming at a (substantially) homogeneous distribution of the light intensity, can be that also volume elements of a respective working volume which do not comprise portions of the to be printed three-dimensional object are irradiated with the light of the first wavelength which can result in that in such volume elements the photocurable resin can be, while the photocurable resin is still liquid, partially polymerized. Hence, the chemical and/or physical properties of the photocurable resin can be altered in regions comprising such volume elements due to a partial polymerization of the photocurable resin based on the exposure to the light of the first wavelength without an actual need. Also, recycling and reusability of respective partially polymerized photocurable resin can be difficult due to its altered chemical and/or physical properties.

A further possible drawback of employing a resulting light sheet aiming at a (substantially) homogeneous distribution of the light intensity, can be that it renders the volumetric 3d-printing process not efficient and can even compromise the quality of a printed three-dimensional object since at least parts of the energy of the light of the first wavelength which is used for forming the individual light sheets is assigned to volume elements of the photocurable resin which do not comprise portions of the to be printed three-dimensional object.

Hence, there is a need to improve respective volumetric 3d-printing methods, particularly with respect to the efficiency and/or quality of the three-dimensional objects to be printed.

It is therefore, the object of the invention to provide an improved method for volumetric 3d-printing of a three-dimensional object by multi-color photopolymerization of a photocurable resin.

### Summary of the invention

A first aspect of the invention relates to a method for volumetric 3d-printing a three-dimensional object by multi-color photopolymerization, particularly by dual-color photopolymerization, of a photocurable resin. The method comprises, via at least one irradiation device, irradiating a photocurable resin within a working volume with light of a first wavelength and light of a second wavelength, different from the first wavelength, wherein the light of the first wavelength and the light of the second wavelength intersect in at least one formation zone. The at least one formation zone is or comprises typically, the or a zone in which a photopolymerization of the photocurable resin shall take place or takes place, respectively, wherein the photopolymerization results in photocuring of the photocurable resin and forming at least a cross-section of the three-dimensional object to be printed. The formation zone can thus, also be deemed or denoted "the object formation zone".

The method generally comprises irradiating a photocurable resin with light of a first wavelength and light of a second wavelength, which is different from the first wavelength, to form, by multi-color photopolymerization, particularly by dual-color photopolymerization, a three-dimensional object in at least one direction. The method thus, comprises irradiating a photocurable resin with light of a first wavelength and light of a second wavelength, which is different from the first wavelength, to form by multi-color photopolymerization, particularly by dual-color photopolymerization, a three-dimensional object in at least one direction. The at least one direction can be or comprise a formation direction of the respective three-dimensional object to be printed, i. e. the or a direction in which the respective three-dimensional is printed.

The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a concrete example, the first wavelength can be ca. 375 nm. Typically, the first wavelength will be chosen at least under consideration of the photochemical properties, particularly the photochromic properties, of molecules of at least one photoinitiator of the photocurable resin.

The light of the second wavelength can comprise a wavelength in the range of: 400 nm - 1000 nm, particularly 425 - 750 nm, more particularly 450 - 675 nm, more particularly 500 -650 nm, for instance. The light of the second wavelength can comprise a spectrum of wavelengths, particularly at least partly covering the respective ranges. As an example, the second wavelength can be ca. 475 nm. Typically, the second wavelength will be chosen at least under consideration of the photochemical properties, particularly the photochromic properties, of molecules of at least one photoinitiator of the photocurable resin.

As indicated above, the photocurable resin is irradiated with the light of the first wavelength and the light of the second wavelength such that the light of the first wavelength and the light of the second wavelength intersect in at least one formation zone. Hence, the light of the first wavelength can be irradiated into the photocurable resin and the working volume, respectively at a first angle, e.g. with respect to a base plane of the working volume or a wall of a container delimiting the working volume, and the light of the second wavelength can be irradiated into the photocurable resin and the working volume, respectively at a second angle, different from the first angle, e.g. with respect to a base plane of the working volume or a wall of a container delimiting the working volume. As an example, the light of the first wavelength can be irradiated into the photocurable resin and working volume, respectively at an angle of ca. 90° angle relative to the light of the second wavelength.

The light of the first wavelength comprises at least one light sheet extending through the photocurable resin and working volume, respectively. A respective light sheet can comprise one or more light beams of the light of the first wavelength or one or more sets of light beams of the light of the first wavelength. In examples in which a respective light sheet comprises two or more light beams of the light of the first wavelength, some or all of the light beams of an individual light sheet can extend substantially parallel or at an angle relative to each other or to a wall of a container delimiting the working volume. In examples in which a respective light sheet comprises one or more sets of light beams of the light of the first wavelength, one, more or all sets of light sheets can comprise at least two light beams which extend substantially parallel or at an angle relative to each other or to a wall of a container delimiting the working volume. A respective light sheet can thus, be or comprise a light plane in which one or more light beams, particularly substantially parallel light beams, of the light of the first wavelength extend directly adjacent such that there is no intermediate space between directly adjacent light beams or sets of light beams, respectively. Alternatively, a respective light sheet can be or comprise a light plane in which the or a plurality of light beams extend adjacent such that there is an intermediate space between directly adjacent light beams. Respective substantially parallel light beams of the light of the first wavelength can be generated by at least one light source which can be or comprise a directed light emission device, such as e.g. a laser device. A respective light source can form part of an irradiation device of a volumetric printing apparatus used for carrying out the method, for instance. Particularly, a respective light source can form part of a first irradiation apparatus of a respective irradiation device.

The light of the second wavelength can comprise a projection of images corresponding to a cross-sectional geometry of a three-dimensional object to be printed or a plurality of points or lines corresponding to a cross-sectional geometry of a three-dimensional object to be printed. Respective points or lines can form a pattern, such as e.g. a hatch pattern. A respective projection of the light of the second wavelength can be generated by at least one light source which can be or comprise a light projection device, such as e.g. a digital light projection device, which can form part of an irradiation device of a volumetric printing apparatus used for implementing the method. A respective point or line of the light of the second wavelength can be generated by at least one light source which can be or comprise a directed light emission device, such as e.g. a laser device. A respective light source can form part of an irradiation device of a volumetric printing apparatus used for implementing the method, for instance. Particularly, a respective light source can form part of a second irradiation apparatus of a respective irradiation device.

During the 3d-printing process, the at least one formation zone can be moved along the at least one direction, particularly relative to a container, which delimits the working volume and which thus, comprises the photocurable resin. The at least one direction can comprise the or a formation direction of the three-dimensional object to be printed. Motion of the at least one formation zone can e.g. be relative to at least one functional component of a volumetric 3d-printing apparatus used for carrying out the method. A respective functional component of a respective volumetric 3d-printing apparatus can be a respective container or a respective irradiation device, for instance. As such, during the 3d-printing process, the at least one formation zone can be actively moved along the at least one direction, particularly the formation direction, through at least one part of the container volume, while the container is stationary. Alternatively, during the 3d-printing process, the container can be actively moved along the at least one direction, particularly opposite to the formation direction, while the at least one formation zone is stationary. Further alternatively, both the at least one formation zone and the container can be actively moved, wherein the at least one formation zone and the container can be moved in opposite directions, during the 3d-printing process.

Irradiating the photocurable resin with the light of the first wavelength causes one or more photoinitiator molecules of the photocurable resin to transfer from an initial state into an intermediate state with changed optical properties compared to the initial state, such that the one or more photoinitiator molecules in the intermediate state can absorb the light of the second wavelength which results in that the photoinitiator molecules are transferred from the intermediate state to a reactive state by absorption of light of the second wavelength which locally triggers the polymerization (and curing, respectively) of the photocurable resin to form at least one three-dimensional object.

As an example, the photocurable resin can be or comprise a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically, effected by irradiating the photocurable resin with the light of the first wavelength and, particularly simultaneously, the light of the second wavelength, which differs from the first wavelength, which results in that one or more photoinitiator molecules of the photocurable resin are converted, e.g., due to the absorption of the light of the first wavelength, from an initial state in which the one or more photoinitiator molecules (substantially) do not absorb the light of the second wavelength, into an intermediate state with changed optical properties compared to the initial state, such that the one or more photoinitiator molecules in the intermediate state absorb the light of the second wavelength which results in that the one or more photoinitiator molecules are transferred from the intermediate state to a reactive state which locally triggers the polymerization (and curing, respectively) of the photocurable resin to form at least one three-dimensional object.

A back reaction of the one or more photoinitiator molecules from the intermediate state into the initial state can be thermally induced, for instance. Hence, the intermediate state of the one or more photoinitiator molecules may return thermally at the printing temperature of the photocurable resin to the initial state. Preferably, the intermediate state of the one or more photoinitiator molecules may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state of the one or more photoinitiator molecules may substantially not return thermally at the respective printing temperature of the photocurable resin to the initial state. Preferably, the intermediate state of the one or more photoinitiator molecules may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state of the one or more photoinitiator molecules may substantially not return thermally at the printing temperature of the photocurable resin to the initial state. Preferably, the intermediate state of the one or more photoinitiator molecules may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

According to the method, the light of the first wavelength comprises a plurality of individual light sheets extending each in a main extension direction through the photocurable resin and working volume, respectively at at least one angle or at least two different angles relative to each other. Hence, the light of the first wavelength forms a plurality of individual light sheets extending through the photocurable resin each in a main extension direction and working volume, respectively at at least one angle or at least two different angles relative to each other.

The main extension direction of each respective individual light sheet, a light beam or a light stripe can be generally understood as the extension direction of the respective individual light sheet, light beam or light stripe between opposing walls or wall portions of a container delimiting the working volume. Particularly, the main extension direction of each respective individual light sheet, light beam or light stripe can be understood as the main propagation direction of the light of the individual light sheet, the light beam or the light stripe between opposing walls or wall portions of a container delimiting the working volume. Hence, the main extension direction of each respective individual light sheet, light beam, or light stripe can correspond to a direction along a line which halves the divergence or divergence angle, respectively of the individual light sheet, the light beam or the light stripe within the working volume.

The height direction or height extension of each respective individual light sheet, light beam or light stripe can be generally understood as the direction with maximum spatial extension which extends orthogonal to the main extension direction. Particularly, the height direction or height extension can be a direction parallel to a wall or wall portion of a container delimiting the working volume through which wall or wall portion, respectively the individual light sheet, light beam or light stripe enters the working volume.

The width direction or width extension of each respective individual light sheet, light beam or light stripe can be generally understood as the direction which extends orthogonal to both the main extension direction and the height direction.

Generally, each light sheet may comprise at least one light beam of the light of the first wavelength which extends through the photocurable resin and working volume, respectively at a specific angle, e.g. with respect to a base plane of the working volume or a wall of a container delimiting the working volume. Particularly, each light sheet may comprise at least two light beams of the light of the first wavelength which at least two light beams extend in essentially a common plane. The at least two light beams may extend in parallel or angled relative to each other. The at least two light beams can be emitted simultaneously or sequentially. The at least two light beams can be or comprise at least one of the following: at least two light beams having a temporal offset ("flying spot"), at least two sequential light beams or at least two simultaneous light beams, created e.g. via a lens, for instance. Each of the plurality of individual light sheets can thus, be formed by a single light beam or by at least two light beams, particularly by at least two light beams having a temporal offset ("flying spot"), by at least two sequential light beams or by at least two simultaneous light beams, created e.g. via a lens, for instance.

As an example, one or more individual light sheets can comprise at least one light stripe. A respective light stripe can be formed by one or more light beams of the light of the first wavelength. A respective light stripe can represent a "minimum configuration" of a respective light sheet. Particularly, at least one individual light sheet can comprise at least one light stripe comprising a height extension which is smaller than the respective maximum spatial extension of the working volume in the respective spatial direction. Further, at least one individual light sheet can comprise multiple light stripes, particularly multiple light stripes extending in parallel or angled relative to each other, wherein each light stripe comprises a height extension which is smaller than the respective maximum spatial extension of the working volume in the respective spatial direction. Notably, respective multiple light stripes can be generated with a spatial and/or temporal offset.

According to the method, the plurality of individual light sheets overlap in at least one light sheet overlapping zone. Thus, the plurality of individual light sheets typically, extend in a common plane, but extend in different directions through the working volume and overlap in at least one light sheet overlapping zone in which a resulting light sheet comprising the overlapping portions of the plurality of individual light sheets is formed. The at least one light sheet overlapping zone can, due to the overlapping of multiple individual light sheets, comprise a high intensity of the light of the first wavelength, particularly relative to other zones which do not comprise overlapping light sheets, which results in an inhomogeneous distribution of the intensity of the light of the first wavelength within the photocurable resin and the working volume, respectively. The at least one light sheet overlapping zone can be or comprise the at least one formation zone in which the photocurable resin is cured so as to form a portion of a three-dimensional object to be printed. In other words, the at least one light sheet overlapping zone can be or comprise one or more volume elements, such as e.g. one or more voxels, of the photocurable resin or working volume, respectively which are to be photocured to form a part of the three-dimensional object to be printed.

As an example, a first light sheet of the plurality of individual light sheets can extend through the working volume at a first angle, e.g. with respect to a base plane of the working volume or a wall of a container delimiting the working volume, and along a first direction, and at least one further light sheet of the plurality of individual light sheets can extend through the working volume at at least one further angle, e.g. with respect to the base plane of the working volume or a wall of a container delimiting the working volume, and along at least one further direction with the at least one further angle being different form the first angle and the at least one further direction being different from the first direction. Notably, the at least one further direction is typically, not a direction opposite to the first direction but angled thereto. As such, the angle between at least two light sheets of the plurality of individual light sheets is typically an angle between 1 and 179° or between 181° and 359°. As an example, the at least one further direction can be a direction extending at an angle of 45° or 90° relative to the first direction such that the angle between the at least one further light sheet of the plurality of individual light sheets and the first light sheet of the plurality of individual light sheets can be 45° or 90°, for instance.

In other words, the method may comprise that the plurality of individual light sheets extending through the photocurable resin and working volume, respectively at different angles relative to each other and overlapping in at least one light sheet overlapping zone, comprises a first individual light sheet which extends at a first angle through the photocurable resin and at least one second individual light sheet which extends at an angle, particularly an angle of 1 - 179°, e.g. at an angle of essentially 90°, relative to the first individual light sheet through the photocurable resin and working volume, respectively. Particularly, two, three, four, five, six, seven or eight individual light sheets can be generated which extend at a specific angle relative to each other through the photocurable resin and working volume, respectively. The specific angle can be an angle α = 360°/n, wherein n represents the number of individual light sheets.

Hence, a first light sheet of the plurality of individual light sheets can enter the working volume through a first wall or first wall portion of a container delimiting the working volume and at least one further light sheet of the plurality of individual light sheets can enter the working volume through at least one further wall or further wall portion of the container delimiting the working volume, wherein the at least one further wall or further wall portion is different from the first wall or first wall portion. Notably, the at least one further wall or further wall portion of a respective container is typically, not a wall or a wall portion arranged opposite to the first wall or first wall portion of the container but at an angle thereto. As an example, the at least one further wall or further wall portion of a respective container can be a wall or a wall portion arranged at an angle of 45° or 90° relative to the first wall or a wall portion of the respective container. Notably, another light sheet, additional to the first light sheet and the at least one further light sheet, can enter the working volume through a wall opposite of the first wall.

Particularly, one, more or all of the plurality of individual light sheets can have a main extension plane which is parallel to a bottom wall of a container delimiting the working volume. The bottom wall of the container can be transmissive at least for the light of the first wavelength and/or for the light of the second wavelength. Hence, at least the bottom wall of the container can be made of a material which enables that the light of the first and/or the second wavelength can enter the working volume. A respective material can be or comprise a transparent material, for instance. A respective transparent material can be glass or a polymer, such as e.g. polycarbonate, polymethylmethacrylate, or cyclic polyolefin polymer, for instance.

According to the method, the plurality of individual light sheets form a resulting light sheet. The resulting light sheet thus, comprises all individual light sheets present in the photocurable resin and working volume, respectively. The resulting light sheet thus, comprises both non-overlapping portions of the individual light sheets and the at least one light sheet overlapping zone.

According to the method, the irradiation device, which is used for generating the plurality of individual light sheets extending through the photocurable resin at at least one angle or at least two different angles relative to each other and overlapping in at least one light sheet overlapping zone, particularly controls the intensity distribution of the plurality of individual light sheets, particularly according to or depending from the absorption properties of the photocurable resin, such that an inhomogeneous intensity distribution or light distribution, respectively of the resulting light sheet is achieved in at least parts of the working volume. Hence, the method particularly, enables a concerted and deliberated generation of a resulting light sheet having an inhomogeneous distribution of the intensity of the light of the first wavelength which results in an inhomogeneous distribution of the intensity of the light of the first wavelength in at least parts of the working volume. As such, the method particularly, enables that different volume elements, e.g. voxels, of the photocurable resin and working volume, respectively can be irradiated with different light intensities of the light of the first wavelength.

The absorption properties of the photocurable resin typically, result from the physical and/or chemical properties of the photocurable resin, such as e.g. the temperature, density, viscosity or the chemical composition of the photocurable resin, particularly the concentration and/or type of monomers, oligomers, photoinitiator molecules, additives, such as e.g. absorbers, impurities, etc. The absorption properties of the photocurable resin generally cause light absorption and reduction of the intensity of the individual light sheets penetrating through the working volume resulting in a decrease in intensity of the light individual light sheets, light beams or light stripes with increasing penetration into the working volume. Thus, high absorption properties of the photocurable resin cause a high absorption of light and reduction of intensity, and low absorption properties of the photocurable resin cause a low absorption of light and reduction of intensity, accordingly.

Particularly, the method enables that volume elements, such as e.g. voxels, of the photocurable resin and working volume, respectively which correspond to or represent portions of the working volume in which a three-dimensional object is to be printed can be irradiated with a different intensity of the light of the first wavelength, particularly a higher intensity of the light of the first wavelength, than volume elements, such as e.g. voxels, of the photocurable resin and working volume, respectively which do not correspond to or do not represent portions of the working volume in which a three-dimensional object is to be printed.

The method thus, overcomes the above-mentioned possible drawbacks of known volumetric 3d-printing methods by controlling the intensity distribution of the light of the first wavelength and the intensity distribution of the plurality of individual light sheets such that an inhomogeneous intensity distribution of the light of the first wavelength and/or the resulting light sheet is achieved in at least parts of the working volume as specified above. Particularly, the method enables concertedly and deliberately assigning individual intensities of the light of the first wavelength to individual volume elements of the photocurable resin and working volume, respectively such that each volume element of the photocurable resin and working volume, respectively can be individually assigned with a specific intensity of the light of the first wavelength. This can also facilitate that each volume element of the photocurable resin and working volume, respectively can be individually assigned with specific curing properties of the photocurable resin since the curing properties of the photocurable resin typically, depend from the intensity of the light of the first wavelength a respective volume element has been exposed to.

The irradiation device used for generating the plurality of individual light sheets can comprise at least one controller, particularly a hardware- and/or software-embodied controller, for controlling the intensity distribution of the plurality of individual light sheets such that an inhomogeneous intensity distribution of the light of the first wavelength and/or an inhomogeneous intensity distribution of the resulting light sheet is achieved in at least parts of the photocurable resin and working volume, respectively. The controller can comprise, e.g. in the shape of a computer program product, control instructions which, when executed by the controller, cause the irradiation device to control the intensity distribution of the plurality of individual light sheets such that an inhomogeneous intensity distribution of the light of the first wavelength and/or of the resulting light sheet is achieved in at least parts of the working volume.

Typically, an inhomogeneous intensity distribution of the light of the individual light sheets, respective light beams or respective light stripes relates to the respective height direction or extension of the individual light sheets, the light beams or light stripes. As such, the irradiation can be particularly, configured to control the intensity distribution of the plurality of individual light sheets such that an inhomogeneous intensity distribution of the light of the first wavelength and/or an inhomogeneous intensity distribution of the resulting light sheet is achieved in at least parts of the photocurable resin and working volume, respectively in the height direction or height extension, respectively.

Exemplary embodiments of the method and related examples will be specified in the following. Notably, one, more or all of the exemplary embodiments and examples can be arbitrarily combined.

According to an exemplary embodiment of the method, the position and/or size of the at least one light sheet overlapping zone can, particularly temporally and/or spatially, vary throughout the 3d-printing process. As such, the irradiation device can change the position and/or size of the at least one light sheet overlapping zone throughout the 3d-printing process. Particularly, the irradiation device can dynamically change the position and/or size of the at least one light sheet overlapping zone throughout the 3d-printing process with respect to the position and/or size of volume elements of the photocurable resin and working volume, respectively which correspond to or represent portions of the working volume in which a three-dimensional object is to be printed. In other words, the irradiation device can change the position and/or size of the at least one light sheet overlapping zone throughout the 3d-printing process in dependence from the position and/or size of volume elements of the photocurable resin and working volume, respectively which correspond to or represent portions of the working volume in which a three-dimensional object is to be printed. This also means that the irradiation device can generally change the position and/or size of the at least one light sheet overlapping zone based on input quantities, such as e.g. the position and/or size of the at least one light sheet overlapping zone in dependence from the position and/or size of volume elements of the photocurable resin and working volume, respectively which correspond to or represent portions of the working volume in which a three-dimensional object is to be printed. As such, during a 3d-printing process the position and/or size of the at least one light sheet overlapping zone can be varied within the photocurable resin and working volume, respectively.

According to another exemplary embodiment of the method, the irradiation device can control the intensity distribution of the plurality of individual light sheets such that an inhomogeneous intensity distribution of the light of the first wavelength and/or of the resulting light sheet is achieved in at least parts of the working volume in dependence of the optical properties, particularly the absorption properties, of the photocurable resin and/or possible changes of the optical properties, particularly the absorption properties, of the photocurable resin during the irradiation and 3d-printing process, respectively. Hence, the method can comprise taking into account the optical properties, particularly the absorption properties, of the photocurable resin and/or possible changes of the optical properties, particularly the absorption properties, of the photocurable resin during the irradiation and 3d-printing process, respectively for controlling the intensity distribution of the plurality of individual light sheets which enables an individual control of the light intensity applied to individual volume elements, such as e.g. voxels, or individual groups of volume elements, such as e.g. groups of voxels, of the photocurable resin and working volume, respectively. A respective individual control of the light intensity applied to individual volume elements, such as e.g. voxels, or individual groups of volume elements, such as e.g. groups of voxels, of the photocurable resin and working volume, respectively can e.g. facilitate printing three-dimensional objects with higher accuracy, for instance.

As such, the method can comprise at least one step of determining the optical properties, particularly the absorption properties, of the photocurable resin and/or possible changes of the optical properties, particularly the absorption properties, of the photocurable resin before, during or after the irradiation and 3d-printing process, respectively. Determining the optical properties, particularly the absorption properties, of the photocurable resin and possible changes of the optical properties, particularly the absorption properties, of the photocurable resin can be facilitated with a determination device which can be configured to determine the optical properties, particularly the absorption properties, of the photocurable resin and possible changes of the optical properties, particularly the absorption properties, of the photocurable resin. A respective determination device can comprise one or more determination elements, such as sensor elements, particularly acoustic and/or optical sensor elements, which can e.g. be arranged adjacent outside and/or inside the working volume. As an example, respective determination elements can be arranged outside and/or inside the working volume in a distributed manner such that a multi-dimensional determination of the optical properties of the photocurable resin is possible.

According to another exemplary embodiment of the method, the irradiation device can control the intensity distribution of the light of the first wavelength and/or of the resulting light sheet via the intensity distribution of the plurality of individual light sheets, wherein the light of the first wavelength inside the at least one light sheet overlapping zone has a different, particularly a higher, light intensity than the light of the first wavelength outside the at least one light sheet overlapping zone. As indicated above, the at least one light sheet overlapping zone can be or comprise the at least one formation zone in which the photocurable resin is cured so as to form at least a portion of a three-dimensional object to be printed. As such, the intensity of the light of the first wavelength applied to the at least one formation zone and thus, the intensity of the light of the first wavelength inside the at least one formation zone, respectively can be different, particularly higher, than the intensity of the light of the first wavelength applied to regions outside the at least one formation zone and thus, the intensity of the light of the first wavelength outside the at least one formation zone. Hence, the method enables that the intensity of the light of the first wavelength applied to the at least one formation zone, i.e. generally zones in which portions of the three-dimensional object to be printed are formed, can be different, i.e. particularly higher, than the intensity of the light of the first wavelength applied to one or more non-formation zones, i.e. zones in which no portions of the three-dimensional object to be printed are formed and/or zones of the light sheet overlapping zone and/or zones of the resulting light sheet where no formation of the three-dimensional object to be printed is intended, respectively, e.g. because these zones are not irradiated with the light of the second wavelength or only with a low intensity of the light of the second wavelength, particularly lower intensity of the second wavelength compared to the formation zone. This can result in that the photocurable resin in the at least one formation zone can have a highly active intermediate state, i.e. a high(er) number of photoinitiator molecules of the photocurable resin have been transferred into the intermediate state due to the high(er) intensity of the light of the first wavelength, which typically, results in improved properties of the resulting three-dimensional object.

Particularly, the irradiation device can control the intensity distribution of the resulting light sheet via the intensity distribution of the plurality of individual light sheets, wherein the intensity of the light of the first wavelength inside the at least one light sheet overlapping zone has a different, particularly a higher, light intensity than the light of the first wavelength outside the at least one light sheet overlapping zone depending from a change of a parameter, e.g. size, shape, position, of the at least one formation zone. As such, also one or more parameters of the at least one formation zone can be taken into account for controlling the intensity of the light of the first wavelength within the at least one formation zone.

According to another exemplary embodiment of the method, the irradiation device can control the intensity distribution of the plurality of individual light sheets such that an inhomogeneous intensity distribution of the light of the first wavelength and/or of the resulting light sheet is achieved in at least parts of the working volume, in dependence of the location at which the photocurable resin and the working volume, respectively is irradiated with the light of the second wavelength. Particularly, the irradiation device can control the intensity distribution of the plurality of individual light sheets such that the at least one formation zone obtains a higher intensity of the light of the first wavelength than zones outside the at least one formation zone. Applying a higher intensity of the light of the first wavelength to the at least one formation zone can improve the curing properties of the photocurable resin in the at least one formation zone which can improve the properties of the three-dimensional object to be printed for the reasons set forth above.

According to another exemplary embodiment of the method, the irradiation device can control the intensity distribution of the light of the first wavelength and/or of the resulting light sheet via the intensity distribution of the plurality of individual light sheets such that at least one volume element, such as e.g. a voxel, of the at least one formation zone can have a higher, e.g. by at least 1%, particularly, 5%, particularly by at least 10%, more particularly by at least 25%, more particularly by at least 50%, light intensity than the average light intensity of the volume elements, such as e.g. voxels, of the non-formation zone (which is, as indicated above, a respective volume of the photocurable resin which does not comprise a part of the three-dimensional object to be printed), particularly such that the average light intensity in the at least one formation zone is higher than the average light intensity in the non-formation zone. Particularly, the irradiation device can control the intensity distribution of the light of the first wavelength and/or of resulting light sheet via the intensity distribution of the plurality of individual light sheets such that the average light intensity in the at least one formation zone can be higher, e.g. by at least 1%, particularly, 5%, particularly by at least 10%, more particularly by at least 25%, more particularly by at least 50%, than the average light intensity in respective non-formation zones. Hence, the method enables that the intensity of the light of the first wavelength applied to the at least one formation zone, i.e. generally zones in which portions of the three-dimensional object to be printed are formed, is higher than the average intensity of the light of the first wavelength applied to one or more non-formation zones, i.e. zones in which no portions of the three-dimensional object to be printed are formed. This can also result in that the photocurable resin in the at least one formation zone can have a highly active intermediate state, i.e. a high(er) number of photoinitiator molecules of the photocurable resin have been transferred into the intermediate state due to the high(er) intensity of the light of the first wavelength, which typically, results in improved properties of the resulting three-dimensional object.

According to another exemplary embodiment of the method, the intensity of the light of the first wavelength can be changed, particularly modulated, while irradiating the photocurable resin in the working volume. Particularly, the intensity of the light of the first wavelength can be changed, particularly modulated, while irradiating the photocurable resin in the working volume, particularly with respect to a parameter, e.g. size, shape, or position, of the at least one formation zone. Changing the intensity of the light of the first wavelength and thus, changing the intensity of the light of one or more respective individual light sheets while irradiating the photocurable resin in the working volume can be another means to assign a specific intensity of the light of the first wavelength to specific volume elements of the photocurable resin and thus, supports the approach of the method which comprises assigning individual light intensities to individual volume elements of the photocurable resin and working volume, respectively. Changes of the intensity of the light of the first wavelength can be implemented by a light modulating device, such as e.g. a spatial light modulator, assigned to the irradiation device, for instance.

It has been indicated above that the plurality of individual light sheets extending through the photocurable resin at different angles relative to each other and overlapping in at least one light sheet overlapping zone, can comprise a first individual light sheet which extends at a first angle through the photocurable resin and working volume, respectively, and at least one second individual light sheet which extends at an angle of 1 - 179°, particularly at an angle of essentially 90°, relative to the first individual light sheet through the photocurable resin and working volume, respectively.

As indicated above, the method particularly, comprises that two, three, four, five, six, seven or eight individual light sheets can be generated which extend at a specific angle relative to each other through the photocurable resin and working volume, respectively. The specific angle can be an angle α = 360°/n, wherein n represents the number of individual light sheets.

As an example, the irradiation device can form or generate at least three individual light sheets, wherein at least a first individual light sheet extends at a first angle through the photocurable resin, e.g. with respect to a base plane of the working volume or a wall of a container delimiting the working volume, a second individual light sheet extends at an angle of 1 - 179°, particularly at an angle of essentially 120,° relative to the first individual light sheet through the photocurable resin, and a third individual light sheet extends at an angle of 1 - 179°, particularly at an angle of essentially 120°, relative to the second individual light sheet through the photocurable resin. As such, the irradiation device can form or generate at least three individual light sheets, wherein at least a first individual light sheet has a main extension direction extending at a first angle through the photocurable resin, e.g. with respect to a base plane of the working volume or a wall of a container delimiting the working volume, a second individual light sheet has a main extension extending at an angle of 1 - 179°, particularly at an angle of essentially 120,° relative to the first individual light sheet through the photocurable resin, and a third individual light sheet has a main extension direction extending at an angle of 1 - 179°, particularly at an angle of essentially 120°, relative to the second individual light sheet through the photocurable resin.

As another example, the irradiation device can form or generate at least four individual light sheets, wherein at least a first individual light sheet extends at a first angle through the photocurable resin, e.g. with respect to a base plane of the working volume or a wall of a container delimiting the working volume, a second individual light sheet extends at an angle of 1 - 179°, particularly at an angle of essentially 90,° relative to the first individual light sheet through the photocurable resin, a third individual light sheet extends at an angle of 1 - 179°, particularly at an angle of essentially 90°, relative to the second individual light sheet through the photocurable resin, and a fourth individual light sheet extends at an angle of 1 - 179°, particularly at an angle of essentially 90°, relative to the third individual light sheet through the photocurable resin. As such, the irradiation device can form or generate at least four individual light sheets, wherein at least a first individual light sheet has a main extension direction extending at a first angle through the photocurable resin, e.g. with respect to a base plane of the working volume or a wall of a container delimiting the working volume, a second individual light sheet has a main extension extending at an angle of 1 - 179°, particularly at an angle of essentially 90,° relative to the first individual light sheet through the photocurable resin, a third individual light sheet has a main extension direction extending at an angle of 1 - 179°, particularly at an angle of essentially 90°, relative to the second individual light sheet through the photocurable resin, and a fourth individual light sheet has a main extension direction extending at an angle of 1 - 179°, particularly at an angle of essentially 90°, relative to the third individual light sheet through the photocurable resin.

As another example, the irradiation device can form or generate at least eight individual light sheets, wherein at least a first individual light sheet extends at a first angle through the photocurable resin, e.g. with respect to a base plane of the working volume or a wall of a container delimiting the working volume, a second individual light sheet extends at an angle of 1 - 50, particularly at an angle of essentially 45,° relative to the first individual light sheet through the photocurable resin, a third individual light sheet extends at an angle of 1 - 50°, particularly at an angle of essentially 45°, relative to the second individual light sheet through the photocurable resin, a fourth individual light sheet extends at an angle of 1 - 50° particularly at an angle of essentially 45°, relative to the third individual light sheet through the photocurable resin, a fifth individual light sheet extends at an angle of 1 - 50, particularly at an angle of essentially 45,° relative to the fourth individual light sheet through the photocurable resin, a sixth individual light sheet extends at an angle of 1 - 50°, particularly at an angle of essentially 45°, relative to the fifth individual light sheet through the photocurable resin, a seventh individual light sheet extends at an angle of 1 - 50° particularly at an angle of essentially 45°, relative to the sixth individual light sheet through the photocurable resin, and an eighth individual light sheet extends at an angle of 1 - 50° particularly at an angle of essentially 45°, relative to the seventh individual light sheet through the photocurable resin. As such, the irradiation device can form or generate at least eight individual light sheets, wherein at least a first individual light sheet has a main extension direction extending at a first angle through the photocurable resin, e.g. with respect to a base plane of the working volume or a wall of a container delimiting the working volume, a second individual light sheet has a main extension extending at an angle of 1 - 179°, particularly at an angle of essentially 45,° relative to the first individual light sheet through the photocurable resin, a third individual light sheet has a main extension direction extending at an angle of 1 - 179°, particularly at an angle of essentially 45°, relative to the second individual light sheet through the photocurable resin, a fourth individual light sheet has a main extension direction extending at an angle of 1 - 179°, particularly at an angle of essentially 45°, relative to the third individual light sheet through the photocurable resin, a fifth individual light sheet has a main extension extending at an angle of 1 - 179°, particularly at an angle of essentially 45,° relative to the fourth individual light sheet through the photocurable resin, a sixth individual light sheet has a main extension direction extending at an angle of 1 - 179°, particularly at an angle of essentially 45°, relative to the fifth individual light sheet through the photocurable resin, a seventh individual light sheet has a main extension direction extending at an angle of 1 - 179°, particularly at an angle of essentially 45°, relative to the sixth individual light sheet through the photocurable resin, and an eight individual light sheets has a main extension direction extending at an angle of 1 - 179°, particularly an angle of essentially 45°, relative to the seventh individual light sheets through the photocurable resin.

Particularly, the above example of forming at least three separate individual light sheets can be particularly, beneficial because it enables a compensation for drawbacks based on intensity losses over the penetration. However, the same generally applies to all other numbers of individual light sheets and related angles as well.

At least the above example of forming at least three separate individual light sheets can be a separate, individual and independent aspect of the invention which is generally independent from controlling the intensity distribution of the plurality of individual light sheets such that an inhomogeneous intensity distribution of the resulting light sheet is achieved in at least parts of the working volume and thus, applies also to aiming at a (substantially) homogeneous distribution of the resulting light sheet in at least parts of the working volume.

According to another exemplary embodiment of the method, at least one individual light sheet of the plurality of individual light sheets can be deflected or pivoted by at least one moveable optical element while irradiating the photocurable resin in the working volume. As indicated above, a respective light sheet can comprise one or more light beams of the light of the first wavelength or one or more sets of light beams of the light of the first wavelength. As such, at least one light beam of the light of the first wavelength or at least one set of light beams of the light of the first wavelength can be deflected or pivoted about a deflection axis or pivot axis, respectively while irradiating the photocurable resin in the working volume by at least one moveable optical element which results in that a light sheet is generated which is deflected or pivoted while irradiating the photocurable resin in the working volume. A respective moveable optical element can be or comprise a mirror, particularly a micro-mirror, for instance. A drive device, particularly a micro-drive device, can be assigned to the respective moveable optical element. The drive device can be configured to generate a drive force which, particularly reversibly, transfers the respective optical element in a respective deflecting or pivoting motion, particularly between a first orientation and/or position and a second orientation and/or position. A respective moveable optical element and/or a respective drive device can be or form part of a digital light processing device which can generally comprise a set of chipsets based on optical micro-electro-mechanical technology that uses a digital micromirror device, for instance. Hence, a respective first irradiation apparatus can be or comprise a respective digital light processing device, for instance.

According to another exemplary embodiment of the method, an irradiation device, particularly a respective first irradiation apparatus, can be used which comprises at least one digital light processing device or digital micromirror device, respectively comprising a plurality of moveably, particularly pivotably, supported micro-mirrors, wherein at least one of the plurality of moveably supported micro-mirrors is moved, particularly pivoted, while irradiating the photocurable resin in the working volume. As indicated above, operation of the irradiation device and thus, also operation of the at least one digital micromirror device can be controlled by a respective controller.

According to another exemplary embodiment of the method, an irradiation device, particularly a respective first irradiation apparatus, can be used which comprises at least one beam deflection device, such as e.g. a scanner device, particularly a galvanometer scanner device, configured to deflect at least one light beam of the light of the first wavelength towards at least one reflective surface of at least one optical element, particularly an optical mirror. As indicated above, operation of the irradiation device and thus, also operation of the beam deflection device can be controlled by a respective controller. A respective optical element can be sized and/or shaped such that at least one light beam of the light of the first wavelength which is reflected from its at least one reflective surface towards the working volume covers (substantially) at least the diameter of the working volume. One or more collimating elements, such as e.g. collimating lenses, can be assigned to the at least one optical element.

Specifically, an irradiation device, particularly a respective first irradiation apparatus, can be used which comprises at least one beam deflection device, such as e.g. a scanner device, particularly a galvanometer scanner device, configured to deflect at least one light beam of the light of the first wavelength towards at least one reflective surface of at least one optical element, particularly an optical mirror, of a plurality of optical elements which are arranged around the working volume, particularly so as to surround the working volume. Each respective optical element can be sized and/or shaped such that at least one light beam of the light of the first wavelength which is reflected from its at least one reflective surface towards the working volume covers (substantially) at least the diameter of the working volume. One or more collimating elements, such as e.g. collimating lenses, can be assigned to each respective optical element.

According to another exemplary embodiment of the method, an irradiation device, particularly a respective first irradiation apparatus, can be used which comprises both at least one digital micromirror device and at least one beam deflection device, wherein the at least one digital micromirror device deflects at least one light beam of the light of first wavelength towards the at least one beam deflection device and the at least one beam deflection device deflects the at least one light beam of the light of the first wavelength towards at least one reflective surface of the at least one optical element, particularly an optical mirror, such that the light beam of the light of the first wavelength is deflected into the working volume, particularly forming an individual light sheet. Hence, the optical configuration of an irradiation device of an apparatus used for carrying out the method, can comprise at least one light source of the light of the first wavelength, at least one digital micromirror device comprising a plurality of moveably, particularly pivotably, supported micro-mirrors, wherein at least one of the plurality of moveably supported micro-mirrors is moved, particularly pivoted, while irradiating the photocurable resin in the working volume assigned to the light source, and at least one beam deflection device configured to deflect at least one light beam towards at least one reflective surface of an optical element, particularly an optical mirror, assigned to the at least one beam deflection device, for instance.

According to another exemplary embodiment of the method, at least one individual light sheet of the plurality of individual light sheets can be moved, e.g. rotated, about a central axis of the working volume while irradiating the photocurable resin in the working volume at least with the light of the first wavelength. Particularly, at least one individual light sheet of the plurality of individual light sheets can be moved, e.g. rotated, at a full rotation about the central axis of the working volume while irradiating the photocurable resin in the working volume at least with the light of the first wavelength. The central axis of the working volume can correspond to a central axis or symmetrical axis of a container, for instance. In this exemplary embodiment, the working volume can be stationary, particularly with respect to a rotational motion, during the print which can ease the setup of the volumetric 3d-printing apparatus used for carrying out the method.

As is apparent from above, the photocurable resin can be provided in a container delimiting a container volume. The container volume can comprise the working volume in which at least one three-dimensional object can be printed. One or more walls of the container can be made of a material which enables irradiating the photocurable resin inside the container with the light of the first and the second wavelength. A respective material can be a transparent material, for instance. A respective transparent material can be glass or a polymer, such as e.g. polycarbonate, polymethylmethacrylate, or cyclic olefin copolymer, for instance. A respective container can generally have any shape. Exemplary shapes of the container comprise a cuboid shape, a polygonal shape, or a rotationally symmetric shape.

According to another exemplary embodiment of the method, the working volume can be defined by a container having a rotationally symmetric shape, wherein the container is arranged within an outer container, wherein the outer container comprises a refractive index matching medium. Using a container having a rotationally symmetric shape and arranging the container within an outer container which comprises a refractive index matching medium is a measure to avoid possible undesired optical effects, such as e.g. refractive effects, which might compromise the intensity or intensity distribution of the light of the first wavelength inside the working volume and thus, inside the photocurable resin. A respective index matching medium can be a fluid having the same or at least a similar refractive index as the wall of the container and/or the photocurable resin.

According to another exemplary embodiment of the method, the method can comprise at least one step of recycling uncured photocurable resin after irradiating the photocurable resin in the working volume. The at least one recycling step can particularly, comprise mixing photocurable resin which has already undergone a 3d-printing process with fresh resin. Since the method enables individually assigning intensities of the light of the first wavelength to individual volume elements of the photocurable resin, the intensity of absorbed light of photocurable resin which has been irradiated with the light of first wavelength only can be reduced which is beneficial for recycling and reusability purposes because the required amount of fresh photocurable resin to produce a mixture of photocurable resin which is ready for being used in a 3d-printing process can be reduced.

A second aspect of the invention relates to an apparatus for volumetric 3d-printing a three-dimensional object by multi-color photopolymerization of a photocurable resin. The apparatus comprises at least one irradiation device for irradiating a photocurable resin within a working volume with light of a first wavelength and light of a second wavelength, different from the first wavelength, wherein the light of the first wavelength and the light of the second wavelength intersect in at least one formation zone, wherein the light of the first wavelength comprises a plurality of individual light sheets each extending in a respective main extension direction through the photocurable resin at at least one angle or at least two different angles relative to each other and overlapping in at least one light sheet overlapping zone, wherein the plurality of individual light sheets form a resulting light sheet. The irradiation device or a respective controller thereof is configured to control the intensity distribution of the plurality of individual light sheets such that an inhomogeneous intensity distribution or light distribution, respectively of the resulting light sheet is achieved in at least parts of the working volume. Hence, the apparatus of the second aspect of the invention is particularly, configured to carry out the method of the first aspect of the invention such that all remarks made in connection with the method of the first aspect of the invention also apply to the apparatus of the second aspect of the invention and vice versa.

The apparatus is generally configured to form a three-dimensional object via volumetric 3d-printing based on multi-color photopolymerization of a photocurable resin. A respective three-dimensional object can be a technical component or form part of a technical component, for instance. As an example, a technical component can be an optical component or form part of an optical component. As an example, a respective optical component can be a diffractive element, a transmissive element, or a lens element, for instance.

The apparatus can generally be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus typically comprises a container which delimits a working volume for receiving photocurable resin. One or more walls of the container can be made of a material which enables irradiating the photocurable resin inside the container with the light of the first and the second wavelength. A respective material can be a transparent material, for instance. A respective transparent material can be glass or a polymer, such as e.g. polycarbonate, polymethylmethacrylate, or cyclic polyolefin polymer, for instance. The container can be moveably supported in at least one direction. The at least one direction can be or comprise the formation direction of a respective three-dimensional object to be printed.

The apparatus can further comprise an irradiation device, particularly a dual-color irradiation device, configured to irradiate a photocurable resin inside the or a respective container. The irradiation device is configured to irradiate the photocurable resin with light of a first wavelength and, particularly simultaneously, with light of a second wavelength different form the first wavelength. The irradiation device can comprise at least one first irradiation apparatus comprising at least one first light source for generating the light of the first wavelength and at least one second irradiation apparatus comprising at least one second light source for generating the light of the second wavelength. The irradiation device can be configured to generate a light sheet from the light of the first wavelength, wherein the light sheet extends in a light sheet plane. Further, the irradiation device can be configured to generate a light projection from the light of the second wavelength, wherein the light projection intersects with the light sheet at an intersection angle, particularly an intersection angle of (ca.) 90°. A light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

The at least one first irradiation apparatus of the irradiation device of the apparatus can thus, comprise at least one light source configured to irradiate light of a first wavelength towards the photocurable resin to generate at least one first light projection forming a light sheet. A respective light sheet can comprise multiple light beams extending in a common plane. The at least one first irradiation apparatus can be built as or comprise a laser or light emitting diode, for instance. The at least one first irradiation apparatus can further comprise at least one optical element which can e.g. comprise at least one of: a Powell-lens, a cylindrical lens, a diffractive optical element, a beam expanding element, a collimating optical element, etc. Additionally or alternatively, the at least one first irradiation apparatus can comprise a light deflection unit, such as e.g. a galvo-scanner or a polygon scanner, for deflecting light towards the photocurable resin. The at least one first irradiation apparatus can be configured to vary the focus or at least one focus parameter, particularly at least one of: the focus position, the focal length, the depth of focus, or the depth of field, of at least one respective first light projection within the working volume. Particularly, the at least one first irradiation apparatus can be configured to vary the focus or at least one focus parameter with respect to the size of the formation zone. The at least one first irradiation apparatus can comprise one or more controllers configured to vary the focus or at least one focus parameter, particularly at least one of: the focus position, the focal length, the depth of focus, or the depth of field, of at least one respective first light projection within the working volume. Additionally or alternatively, the at least one first irradiation apparatus can comprise one or more optical elements, such as e.g. lenses, which are configured to vary the focus or at least one focus parameter, particularly at least one of: the focus position, the focal length, the depth of focus, or the depth of field, of at least one respective first light projection within the working volume. The light emitted or irradiated by the at least one first irradiation apparatus can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin.

The at least one second irradiation apparatus of the irradiation device of the apparatus can thus, comprise at least one second light source configured to continuously project a projection of images corresponding to a cross-sectional geometry of a three-dimensional object to be printed or a plurality of points or lines corresponding to a cross-sectional geometry of a three-dimensional object to be printed. The second irradiation apparatus can be built as or comprise an image projection device, particularly a digital light projection device, or a directed light emission device, for instance. The at least one second irradiation apparatus can further comprise one or more light projection optics. The at least one second irradiation apparatus can be configured to change the size of at least one image of the projection of images or of at least one image element, such as e.g. a pixel, of at least one image of the projection of images. The at least one second irradiation apparatus can comprise one or more controllers configured to change the size of at least one image of the projection of images or of at least one image element, such as e.g. a pixel, of at least one image of the projection of images. Additionally or alternatively, the at least one second irradiation apparatus can comprise one or more optical elements, such as e.g. lenses, which are configured to change the size of at least one image of the projection of images or of at least one image element, such as e.g. a pixel, of at least one image of the projection of images. The light emitted or irradiated by the at least one second irradiation apparatus can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin.

As indicated above, the irradiation device, particularly the second irradiation apparatus, can be configured to generate a projection of images from the light of the second wavelength, wherein the light projection intersects with the light sheet at an intersection angle, particularly an intersection angle of (ca.) 90°. The irradiation device can thus, be generally configured to irradiate the light of the first wavelength at a first angle, particularly an angle of 0 - 180°, and the light of the second wavelength at a second angle, particularly an angle of 0 - 180°, relative to the main extension plane of the at least one formation zone. Respective angles can particularly, range between 15 and 165°, more particularly between 30 and 150°, more particularly between 90 and 150° or between 30 and 90°. Particularly, the light of the second wavelength can be shifted with respect to the light of the first wavelength at a shifting angle of 90°. As indicated above, a light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

### Brief description of the drawings

With these and other exemplary advantages and exemplary features that will become hereinafter apparent, a more complete understanding of the invention can be obtained by referring to the following description of the appended drawings in which:
Fig. 1 shows a principle drawing of at least parts of an apparatus for 3d-printing a three-dimensional object according to an exemplary embodiment, and
Fig. 2-11 each show a principle drawing of at least parts of an apparatus for 3d-printing a three-dimensional object according to another exemplary embodiment.

### Detailed description of the drawings

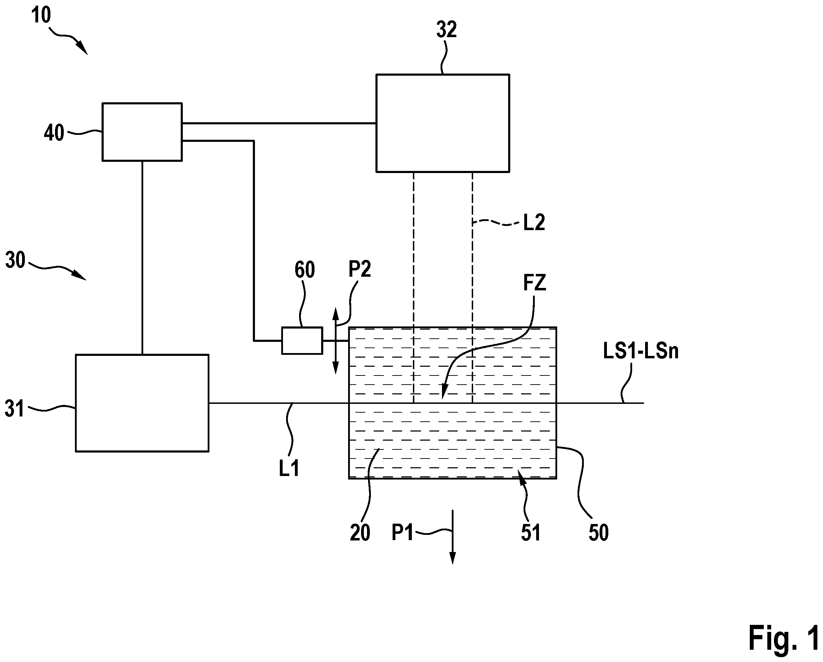

Fig. 1 shows a principle drawing of at least parts of an apparatus 10 for 3d-printing a three-dimensional object according to an exemplary embodiment in a schematic top-view.

The apparatus 10 is configured for volumetric 3d-printing a three-dimensional object by multi-color photopolymerization of a photocurable resin 20 and comprises an irradiation device 30 for irradiating a photocurable resin 20 with light L1 of a first wavelength and light L2 of a second wavelength, different from the first wavelength to form, by dual-color photopolymerization, a three-dimensional object in a in at least one direction (indicated by arrow P1 in Fig. 1) which can be or comprise the formation direction of the three-dimensional object to be printed. As is apparent from Fig. 1, the light L1 of the first wavelength and the light L2 of the second wavelength intersect at an angle, e.g. an angle of ca. 90°, in a formation zone FZ. The formation direction can be understood as the direction in which a respective three-dimensional object is formed/printed relative to the formation zone FZ.

The light L1 of the first wavelength can comprise at least one individual light sheet LS1 - LSn comprising a plurality of light beams extending through the photocurable resin 20. An individual light sheet LS1 - LSn can be or comprise a light plane in which the one or more light beams, particularly parallel or angled light beams, extend adjacent such that there is no intermediate space between directly adjacent light beams. Alternatively, an individual light sheet LS1 - LSn can be or comprise a light plane in which the or a plurality of light beams extend adjacent such that there is an intermediate space between directly adjacent light beams. A respective individual light sheet LS1 - LSn and respective light beams can be generated by at least one first irradiation apparatus 31, such as e.g. a directed light emission device, particularly a laser device, which can form part of an irradiation device 30 of the apparatus 10. Hence, the directed light emission device can be an example of a first irradiation apparatus 31 of an irradiation device 30 of the apparatus 10 as will be explained further below.

The light L2 of the second wavelength can comprise a projection of images corresponding to a cross-sectional geometry of a three-dimensional object to be printed or a plurality of points or lines corresponding to a cross-sectional geometry of a three-dimensional object to be printed. Respective points or lines can form a pattern, such as e.g. a hatch pattern. A respective projection can be generated by a second irradiation apparatus 32, such as e.g. a light projection device, particularly a digital light projection device, which can form part of an irradiation device of the apparatus 10. A respective point or line can be generated by a second irradiation apparatus 32, such as e.g. directed light emission device, particularly laser device, which can form part of an irradiation device 30 of the apparatus 10. Hence, both the light projection device and the directed light emission device can be examples of a second irradiation apparatus 32 of an irradiation device 30 as will be explained further below.

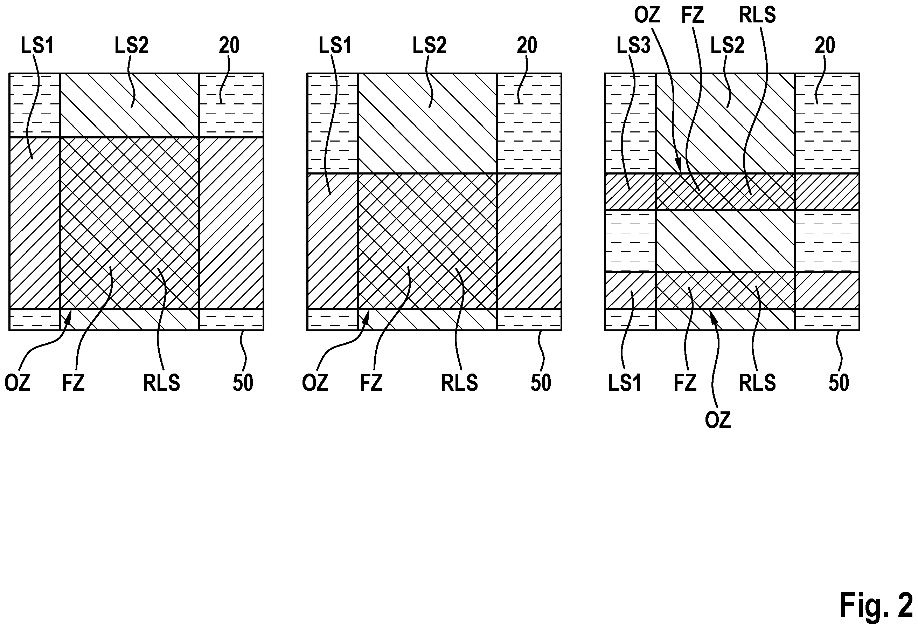

The apparatus 10 comprises a hardware- and/or software-embodied controller 40 configured to control operation of at least the irradiation device 30, i.e. particularly the first irradiation apparatus 31 and/or the second irradiation apparatus 32. The apparatus 10 is thus, configured to implement a method, exemplary embodiments of which will be explained in more detail in connection with Fig. 2 - 11.

The apparatus 10 can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus 10 comprises a container 50 for receiving photocurable resin 20. The container 50 delimits a container volume 51 which can comprise the working volume in which a three-dimensional object can be printed. One or more walls of the container 50 can be made of a material which enables irradiating the photocurable resin inside the container with the light L1, L2 of the first and the second wavelength. A respective material can be a transparent material, for instance. A respective transparent material can be glass or a polymer, such as e.g. polycarbonate, polymethylmethacrylate, or cyclic olefin co-polymer, for instance.

The container 50 can be moveably supported in at least one direction (indicated by double-arrow P2 in Fig. 1) e.g. via an associated drive device 60, e.g. an electric motor. As is apparent from Fig. 1, the at least one direction can be or comprise the formation direction of a respective three-dimensional object to be printed. Notably, the drive device 60 could also be associated with at least one first irradiation apparatus 31 of an irradiation device 30 of the apparatus 10 to move the at least one first irradiation apparatus 31 in analogous manner in at least one direction (indicated by double-arrow P2 in Fig. 1).

As indicated above, the apparatus 10 further comprises an irradiation device 30 which is configured to irradiate the photocurable resin inside the container 50 with the light L1, L2 of the first and second wavelength. Particularly, the irradiation device 30 is configured to simultaneously irradiate the photocurable resin 20 with the light L1, L2 of the first and second wavelength. The irradiation device 30 can be configured to generate one or more individual light sheets LS1 - LSn from the light L1 of the first wavelength. Further, the irradiation device 30 can be configured to generate e.g. a light projection from the light L2 of the second wavelength, wherein the light projection intersects with the one or more light sheets at an intersection angle, particularly an intersection angle of (ca.) 90°. As indicated above, intersection of the light L1, L2 of the first wavelength and the second wavelength occurs in the formation zone FZ. A light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

As is apparent from Fig. 1, the irradiation device 30 can comprise at least one first irradiation apparatus 31 comprising at least one first light source for generating and emitting the light L1 of the first wavelength and at least one second irradiation apparatus 32 comprising at least one second light source for generating and emitting the light L2 of the second wavelength. As will be apparent from the further Fig., the irradiation device 30 can particularly comprise multiple first irradiation apparatuses 31.

The at least one first irradiation apparatus 31 can thus, comprise at least one light source configured to irradiate light L1 of the first wavelength towards the photocurable resin 20 within the working volume to generate one or more individual light sheets. The at least one first irradiation apparatus 31 can be built as or comprise a laser or light emitting diode, for instance. The at least one first irradiation apparatus 31 can further comprise at least one optical element which can e.g. comprise at least one of: a Powell-lens, a cylindrical lens, a diffractive optical element, a beam expanding element, a collimating optical element, etc. Additionally or alternatively, the at least one first irradiation apparatus 31 can comprise a light deflection unit, such as e.g. a galvo-scannerora polygon scanner, for deflecting light towards the photocurable resin 20. The light L1 emitted or irradiated by the at least one first irradiation apparatus 31 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin 20.

The second irradiation apparatus 32 can thus, comprise at least one second light source configured to continuously emit images of light L2 of the second wavelength towards the photocurable 20 resin within the working volume, wherein each image can correspond to a specific cross-section of a three-dimensional object to be printed, or a plurality of points or lines corresponding to a cross-sectional geometry of a three-dimensional object to be printed. The second irradiation apparatus 32 can be built as or comprise an image projection device, particularly a digital light projection device, or a directed light emission device, for instance. The second irradiation apparatus 32 can further comprise one or more light projection optics. The light L2 emitted or irradiated by the second irradiation apparatus 32 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 20.

As indicated above, the irradiation device 30 can thus, be generally configured to irradiate the light L1 of the first wavelength at a first angle, particularly an angle of 0 - 180°, and the light L2 of the second wavelength at a second angle, particularly an angle of 0 - 180°, relative to the main extension direction of the light L1 of the first wavelength. Respective angles can particularly, range between 15 and 165°, more particularly between 30 and 150°, more particularly between 90 and 150° or between 30 and 90°. Particularly, the light L2 of the second wavelength can intersect the light L1 of the first wavelength at an angle of 90° (as is exemplarily shown in Fig. 1).

The apparatus 10 is generally configured for implementing a method for volumetric printing a three-dimensional object by multi-color photopolymerization, particularly by dual-color photopolymerization, of a photocurable resin 20, examples of which will be further explained below in connection with Fig. 2 - 11.

The method generally comprises irradiating a photocurable resin 20 with light L1 of a first wavelength and light L2 of a second wavelength, which is different from the first wavelength, to form, by multi-color photopolymerization, particularly by dual-color photopolymerization, a three-dimensional object in at least one direction. The method thus, comprises a process of irradiating a photocurable resin 20 with light L1 of a first wavelength and light L2 of a second wavelength, which is different from the first wavelength, to form, by multi-color photopolymerization, particularly by dual-color photopolymerization, a three-dimensional object in at least one direction. The at least one direction can be or comprise the formation direction of the respective three-dimensional object to be printed.

As indicated above, the photocurable resin 20 is irradiated with the light L1, L2 of the first wavelength and the light of the second wavelength such that the light L1, L2 of the first wavelength and the light of the second wavelength intersect in a formation zone FZ. The light L1 of the first wavelength can be irradiated into the photocurable resin 20 and the working volume, respectively at a first angle, e.g. with respect to a base plane of the working volume or a wall of the container 50 delimiting the working volume, and the light L2 of the second wavelength can be irradiated into the photocurable resin 20 and the working volume, respectively at a second angle, different from the first angle, e.g. with respect to a base plane of the working volume or a wall of the container 50 delimiting the working volume. As an example, the light L1 of the first wavelength can be irradiated into the photocurable resin and working volume, respectively at an angle of ca. 90° angle relative to the light L2 of the second wavelength. As indicated above, the formation zone FZ is typically, the zone in which a photopolymerization of the photocurable resin 20 takes place which results in photocuring of the photocurable resin 20 and forming at least a cross-section of the three-dimensional object to be printed.

The light L1 of the first wavelength comprises one or more individual light sheet LS1 - LSn extending through the photocurable resin 20 and working volume, respectively in a main extension direction. Each individual light sheet LS1 - LSn can comprise one or more light beams of the light L1 of the first wavelength or one or more sets of light beams of the light L1 of the first wavelength. In examples in which a respective individual light sheet LS1 - LSn comprises two or more light beams of the light L1 of the first wavelength, the light beams can extend in parallel or angled. In examples in which a respective individual light sheet LS1 - LSn comprises one or more sets of light beams of the light L1 of the first wavelength, one, more or all sets of individual light sheets LS1 - LSn can comprise at least two light beams which extend in parallel or angled. A respective individual light sheet LS1 - LSn can thus, be or comprise a light plane in which one or more light beams of the light L1 of the first wavelength extend directly adjacent such that there is no intermediate space between directly adjacent light beams or sets of light beams, respectively. Alternatively, a respective individual light sheet LS1 - LSn can be or comprise a light plane in which the or a plurality of light beams extend adjacent such that there is an intermediate space between directly adjacent light beams. Respective light beams of the light L1 of the first wavelength can be generated by at least one light source which can be or comprise a directed light emission device, such as e.g. a laser device, which can form part of the at least one first irradiation apparatus 31, for instance.

The light L2 of the second wavelength can comprise a projection of images corresponding to a cross-sectional geometry of a three-dimensional object to be printed or a plurality of points or lines corresponding to a cross-sectional geometry of a three-dimensional object to be printed. Respective points or lines can form a pattern, such as e.g. a hatch pattern. A respective projection of the light L2 of the second wavelength can be generated by at least one light source which can be or comprise a light projection device, such as e.g. a digital light projection device, which can form part of the second irradiation apparatus 32, for instance. A respective point or line of the light of the second wavelength can be generated by at least one light source which can be or comprise a directed light emission device, such as e.g. a laser device, which can form part of the second irradiation apparatus 32, for instance.

During the 3d-printing process, the formation zone FZ can be moved along the at least one direction, particularly relative to the container 50. The at least one direction can comprise a direction opposite to the formation direction of the three-dimensional object to be printed. Motion of the formation zone FZ can e.g. be relative to at least one functional component of the apparatus 10. A respective functional component of the apparatus 10 can be the container 30 or the irradiation device 30, for instance. As such, during the 3d-printing process, the formation FZ zone can be actively moved along the at least one direction, particularly opposite the formation direction, through at least one part of the container volume, while the container 50 is stationary. Alternatively, during the 3d-printing process, the container 50 can be actively moved along the at least one direction, particularly the formation direction, while the formation zone FZ is stationary. Further alternatively, both the formation zone FZ and the container 50 can be actively moved, wherein the formation zone FZ and the container 50 can be moved in opposite directions, during the 3d-printing process.

Irradiating the photocurable resin 20 with the light L1 of the first wavelength causes one or more photoinitiator molecules of the photocurable resin 20 to transfer from an initial state into an intermediate state with changed optical properties compared to the initial state, such that the one or more photoinitiator molecules in the intermediate state can absorb the light of the second wavelength which results in that the photoinitiator molecules are transferred from the intermediate state to a reactive state by absorption of light L2 of the second wavelength which locally triggers the polymerization (and curing, respectively) of the photocurable resin 20 to form at least one three-dimensional object.

As an example, the photocurable resin 20 can be or comprise a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically, effected by irradiating the photocurable resin 20 with the light L1 of the first wavelength and, particularly simultaneously, the light L2 of the second wavelength which results in that one or more photoinitiators molecules of the photocurable resin 20 are converted, e.g., due to the absorption of the light L1 of the first wavelength, from an initial state in which the one or more photoinitiator molecules (substantially) do not absorb the light L2 of the second wavelength, into an intermediate state with changed optical properties compared to the initial state, such that the one or more photoinitiator molecules in the intermediate state absorb the light L2 of the second wavelength which results in that the one or more photoinitiator molecules are transferred from the intermediate state to a reactive state which locally triggers the polymerization (and solidification, respectively) of the photocurable resin 20 to form at least one three-dimensional object.

A back reaction of the one or more photoinitiator molecules from the intermediate state into the initial state can be thermally induced, for instance. Hence, the intermediate state of the one or more photoinitiator molecules may return thermally at the printing temperature of the photocurable resin to the initial state. Preferably, the intermediate state of the one or more photoinitiator molecules may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state of the one or more photoinitiator molecules may substantially not return thermally at the respective printing temperature of the photocurable resin to the initial state. Preferably, the intermediate state of the one or more photoinitiator molecules may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state of the one or more photoinitiator molecules may substantially not return thermally at the printing temperature of the photocurable resin to the initial state. Preferably, the intermediate state of the one or more photoinitiator molecules may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

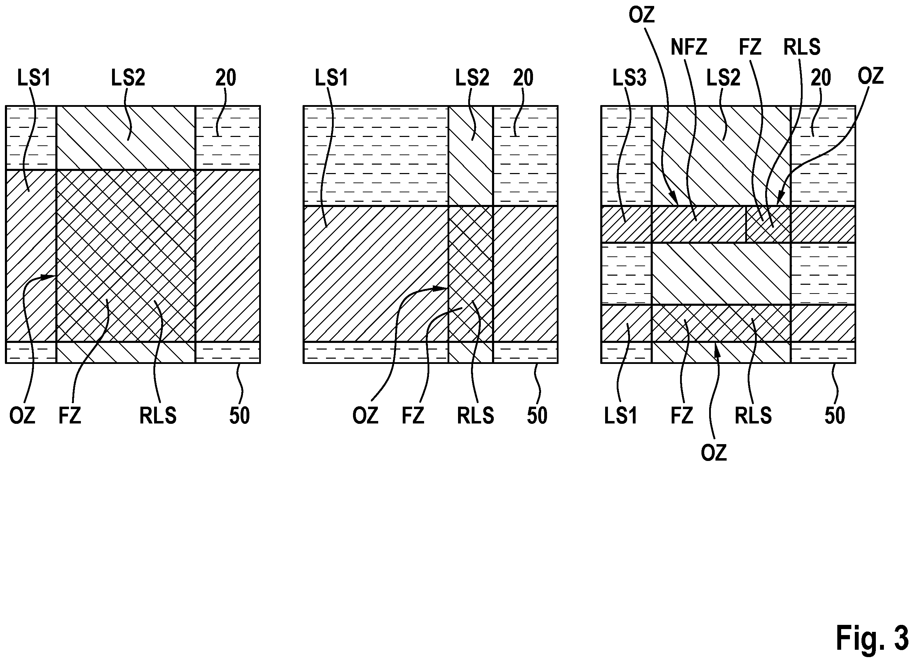

According to the method, the light L1 of the first wavelength comprises a plurality of individual light sheets LS1 - LSn (see e.g. Fig. 2, 3) extending through the photocurable resin 20 and the working volume, respectively at at least one angle or at least two different angles relative to each other. Hence, the light L1 of the first wavelength is used to form a plurality of individual light sheets LS1 - LSn extending through the photocurable resin 20 and the working volume, respectively at at least one angle or at least two different angles relative to each other.

Generally, each light sheet LS1 - LSn may comprise at least one light beam of the light L1 of the first wavelength which extends through the photocurable resin 20 and the working volume, respectively at a specific angle, e.g. with respect to a base plane of the working volume or a wall of the container 50 delimiting the working volume. Particularly, each light sheet LS1 - LSn may comprise at least two light beams of the light L1 of the first wavelength which at least two light beams extend in essentially a common plane. The at least two light beams typically, extend in parallel. The at least two light beams can be emitted simultaneously or sequentially. The at least two light beams can be or comprise at least one of the following: at least two light beams having a temporal offset ("flying spot"), at least two sequential light beams or at least two simultaneous light beams, created e.g. via a lens, for instance. Each of the plurality of individual light sheets LS1 - LSn can thus, be formed by a single light beam or by at least two light beams, particularly by at least two light beams having a temporal offset ("flying spot"), by at least two sequential light beams or by at least two simultaneous light beams, created e.g. via a lens, for instance.

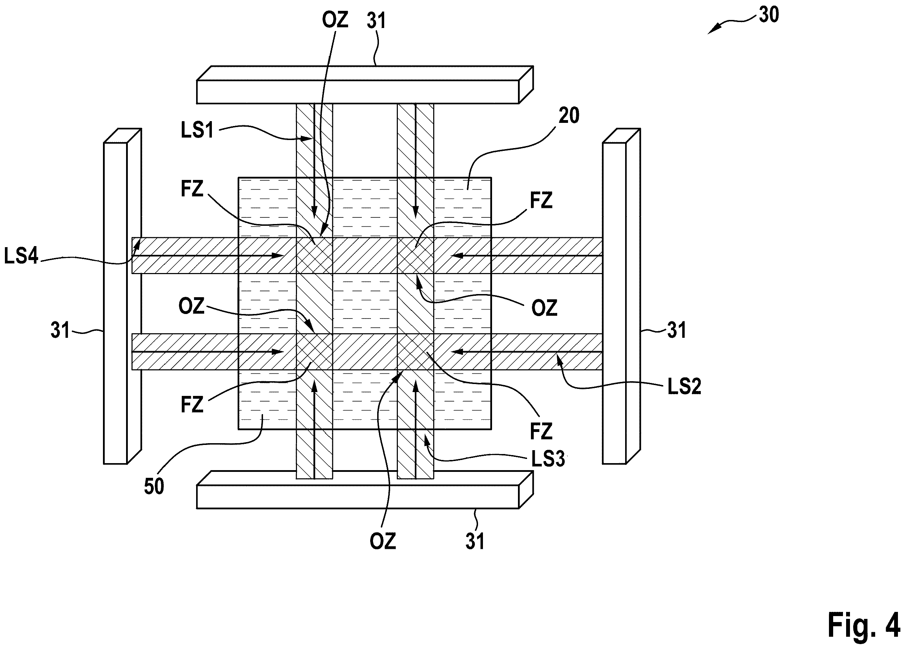

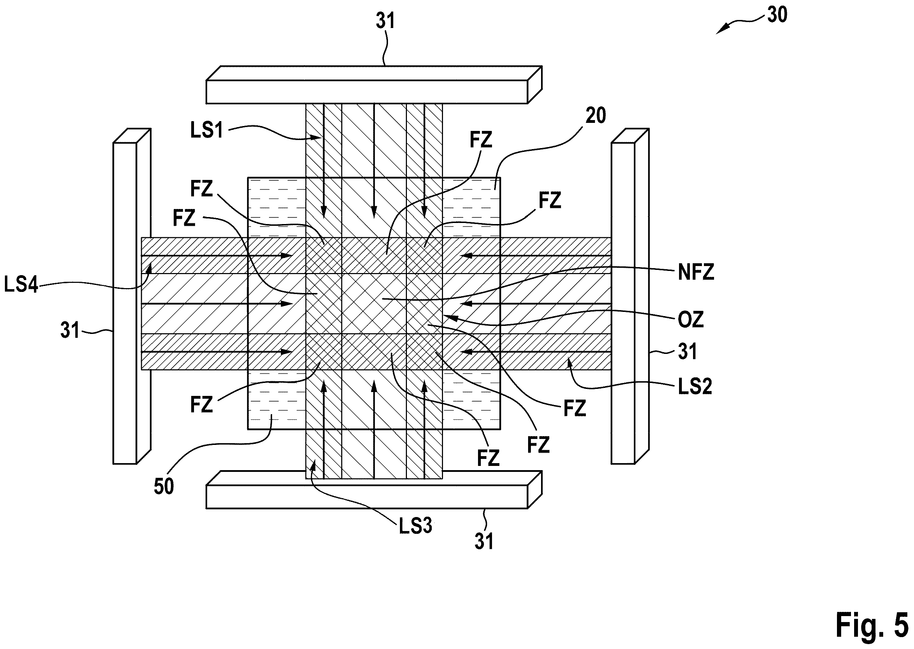

As an example, one or more individual light sheets LS1 - LSn can comprise at least one light stripe (as indicated in e.g. Fig. 4 and Fig. 5). A respective light stripe can be formed by one or more light beams of the light L1 of the first wavelength. A respective light stripe can represent a "minimum configuration" of a respective light sheet. Particularly, at least one individual light sheet can comprise at least one light stripe comprising a height extension which is smaller than the respective maximum spatial extension of the working volume in the respective spatial direction. Further, at least one individual light LS1 - LSn sheet can comprise multiple light stripes, particularly multiple light stripes extending in parallel or angled relative to each other, wherein each light stripe comprises a height extension which is smaller than the respective maximum spatial extension of the working volume in the respective spatial direction. Notably, respective multiple light stripes can be generated with a spatial and/or temporal offset.

According to the method, the plurality of individual light sheets LS1 - LSn overlap in at least one light sheet overlapping zone OZ. Thus, the plurality of individual light sheets LS1 - LSn typically, extend in a common plane, but extend in different directions through the working volume and overlap in at least one light sheet overlapping zone OZ in which a resulting light sheet RLS comprising the overlapping portions of the plurality of individual light sheets LS1 - LSn is formed (see e.g. Fig. 2, 3). The light sheet overlapping zone OZ can, due to the overlapping of multiple individual light sheets LS1 - LSn, comprise a high intensity of the light L1 of the first wavelength, particularly relative to other zones which do not comprise overlapping light sheets LS1 - LSn, which results in an inhomogeneous distribution of the intensity of the light L1 of the first wavelength within the photocurable resin 20 and the working volume, respectively. The at least one light sheet overlapping zone OZ can be or comprise the formation zone FZ in which the photocurable resin 20 is cured so as to form a portion of a three-dimensional object to be printed. In other words, the at least one light sheet overlapping zone OZ can be or comprise one or more volume elements, such as e.g. one or more voxels, of the photocurable resin 20 or working volume, respectively which are to be photocured to form a part of the three-dimensional object to be printed.

As is apparent from e.g. Fig. 2, 3, a first light sheet LS1 of the plurality of individual light sheets LS1 - LSn can extend through the working volume in a main extension direction at a first angle, e.g. with respect to a base plane of the working volume or a wall of the container 50 delimiting the working volume, and along a first direction (see e.g. x-direction in Fig. 2, 3), and at least one second light sheet LS2 of the plurality of individual light sheets LS1 - LSn can extend through the working volume at at least one second angle, e.g. with respect to the base plane of the working volume or a wall of the container 50 delimiting the working volume, and along at least one second direction (see e.g. y-direction in Fig. 2, 3) with the at least one second angle being different form the first angle and the at least one second direction being different from the first direction. Notably, the at least one second direction is not a direction opposite to the first direction but angled thereto. As such, the angle between at least two individual light sheets LS1, LS2 of the plurality of individual light sheets LS1 - LSn is typically an angle between 1 and 179° or between 181° and 359°. As an example, the at least one second direction can be a direction extending at an angle of 45° or 90° relative to the first direction such that the angle between the at least one second light sheet LS2 of the plurality of individual light sheets LS1 - LSn and the first light sheet LS1 of the plurality of individual light sheets LS1 - LSn can be 45° or 90°, for instance.

In other words, the method may comprise that the plurality of individual light sheets LS1 - LSn extending through the photocurable resin 20 and working volume, respectively at different angles relative to each other and overlapping in at least one light sheet overlapping zone OZ, comprises a first individual light sheet LS1 which extends at a first angle through the photocurable resin and at least one second individual light sheet LS2 which extends at an angle of 1 - 179°, particularly at an angle of essentially 90°, relative to the first individual light sheet LS1 through the photocurable resin and working volume, respectively. Particularly, two, three, four, five, six, seven or eight individual light sheets LS1 - LSn can be generated which extend at a specific angle relative to each other through the photocurable resin and working volume, respectively. The specific angle can be an angle α = 360°/n, wherein n represents the number of individual light sheets.

Hence, a first light sheet L1 of the plurality of individual light sheets LS1 - LSn can enter the working volume through a first wall or first wall portion of the container 50 delimiting the working volume and at least one second light sheet LS2 of the plurality of individual light sheets LS1 - LSn can enter the working volume through at least one second wall or second wall portion of the container 50 delimiting the working volume, wherein the at least one second wall or second wall portion is different from the first wall or first wall portion. Notably, the at least one second wall or second wall portion of the container 50 is typically, not a wall or a wall portion arranged opposite to the first wall or first wall portion of the container but at an angle thereto. As an example, the at least one second wall or second wall portion of the container 50 can be a wall or a wall portion arranged at an angle of 45° or 90° relative to the first wall or a wall portion of the container 50. Notably, a third light sheet LS3 can be generated which can be arranged opposite to the first light sheet LS1.

Particularly, one, more or all of the plurality of individual light sheets LS1 - LSn can have a main extension plane which is parallel to a bottom wall of the container 50 delimiting the working volume. The bottom wall of the container 50 can be transmissive at least for the light L1 of the first wavelength and/or for the light L2 of the second wavelength. Hence, at least the bottom wall of the container 50 can be made of a material which enables that the light L1, L2 of the first and/or the second wavelength can enter the working volume. A respective material can be or comprise a transparent material, for instance. A respective transparent material can be glass or a polymer, such as e.g. polycarbonate, polymethylmethacrylate, or cyclic olefin co-polymer, for instance.

According to the method, the plurality of individual light sheets LS1 - LSn form a resulting light sheet RLS. The resulting light sheet RLS thus, comprises all individual light sheets LS1 - LSn present in the photocurable resin 20 and working volume, respectively. The resulting light sheet RLS thus, comprises both non-overlapping portions of the individual light sheets LS1 - LSn and the at least one light sheet overlapping zone OZ. The resulting light sheet RLS therefore, typically also comprise the at least one formation zone FZ.

According to the method, the irradiation device 30, which is used for generating the plurality of individual light sheets LS1 - LSn extending through the photocurable resin at at least one angle or at least two different angles relative to each other and overlapping in at least one light sheet overlapping zone OZ in which a resulting light sheet RLS comprising the overlapping portions of the plurality of individual light sheets LS1 - LSn is formed, particularly controls the intensity distribution of the plurality of individual light sheets LS1 - LSn, particularly according to or depending from the absorption properties of the photocurable resin 20, such that an inhomogeneous intensity distribution of the light of the first wavelength and/or the resulting light sheet RLS is achieved in at least parts of the working volume. Hence, the method particularly enables a concerted and deliberated generation of a resulting light sheet RLS having an inhomogeneous distribution of the intensity of the light L1 of the first wavelength which results in an inhomogeneous distribution of the intensity of the light L1 of the first wavelength in at least parts of the working volume. As such, the method particularly enables that different volume elements, e.g. voxels, of the photocurable resin 20 and working volume, respectively can be irradiated with different light intensities of the light L1 of the first wavelength.

Particularly, the method enables that volume elements, such as e.g. voxels, of the photocurable resin 20 and working volume, respectively which correspond to or represent portions of the working volume in which a three-dimensional object is to be printed can be irradiated with a different intensity of the light L1 of the first wavelength, particularly a higher intensity of the light L1 of the first wavelength, than volume elements, such as e.g. voxels, of the photocurable resin 20 and working volume, respectively which do not correspond to or do not represent portions of the working volume in which a three-dimensional object is to be printed.

The method thus, overcomes possible drawbacks of known volumetric printing methods by controlling the intensity distribution of the light L1 of the first wavelength and the intensity distribution of the plurality of individual light sheets LS1 - LSn such that an inhomogeneous intensity distribution of the light L1 of the first wavelength is achieved in at least parts of the working volume as specified above. Particularly, the method enables concertedly and deliberately assigning individual intensities of the light L1 of the first wavelength to individual volume elements of the photocurable resin 20 and working volume, respectively such that each volume element of the photocurable resin 20 and working volume, respectively can be individually assigned with a specific intensity of the light L1 of the first wavelength. This can also facilitate that each volume element of the photocurable resin 20 and working volume, respectively can be individually assigned with specific curing properties of the photocurable resin 20 since the curing properties of the photocurable resin 20 typically, depend from the intensity of the light L1 of the first wavelength a respective volume element has been exposed to.

For controlling the intensity distribution of the plurality of individual light sheets LS1 - LSn such that an inhomogeneous intensity distribution of the light L1 of the first wavelength and/or of the resulting light sheet RLS is achieved in at least parts of the photocurable resin 20 and working volume, respectively, the irradiation device 30, particularly the at least one first irradiation apparatus 31, can comprise at least one controller 40, particularly a hardware- and/or software-embodied controller. The controller 40 can comprise, e.g. in the shape of a computer program product, control instructions which, when executed by the controller, cause the irradiation device 30, particularly the at least one first irradiation apparatus 31, to control the intensity distribution of the plurality of individual light sheets LS1 - LSn such that an inhomogeneous intensity distribution of the light L1 of the first wavelength and/or of the resulting light sheet RLS is achieved in at least parts of the working volume.

Typically, an inhomogeneous intensity distribution of the light of the individual light sheets LS1 - LSn, respective light beams or respective light stripes relates to the respective height direction or height extension of the individual light sheets LS1 - LSn, the light beams or light beams. As such, the irradiation 30 and controller 40, respectively can be particularly, configured to control the intensity distribution of the plurality of individual light sheets LS1 - LSn such that an inhomogeneous intensity distribution of the light L1 of the first wavelength and/or an inhomogeneous intensity distribution of the resulting light sheet RLS is achieved in at least parts of the photocurable resin 20 and working volume, respectively in the height direction or height extension, respectively.

As is also apparent from e.g. Fig. 2, 3, the position and/or size of the light sheet overlapping zone OZ can, particularly temporally and/or spatially, vary throughout the 3d-printing process. As such, the irradiation device 30 can change the position and/or size of the light sheet overlapping zone OZ throughout the 3d-printing process which is exemplarily shown for three different zones in Fig. 2, 3. Particularly, the irradiation device 30 can dynamically change the position and/or size of the light sheet overlapping zone OZ throughout the 3d-printing process with respect to the position and/or size of volume elements of the photocurable resin 20 and working volume, respectively which correspond to or represent portions of the working volume in which a three-dimensional object is to be printed. In other words, the irradiation device 30 can change the position and/or size of the light sheet overlapping zone OZ throughout the 3d-printing process in dependence from the position and/or size of volume elements of the photocurable resin 20 and working volume, respectively which correspond to or represent portions of the working volume in which a three-dimensional object is to be printed. This also means that the irradiation device 30 can generally change the position and/or size of the light sheet overlapping zone OZ based on input quantities, such as e.g. the position and/or size of the light sheet overlapping zone OZ in dependence from the position and/or size of volume elements of the photocurable resin 20 and working volume, respectively which correspond to or represent portions of the working volume in which a three-dimensional object is to be printed. As such, during a 3d-printing process in accordance with the method, the position and/or size of the light sheet overlapping zone OZ can be varied within the photocurable resin 20 and working volume, respectively.

Additionally or alternatively, the irradiation device 30 can control the intensity distribution of the plurality of individual light sheets LS1 - LSn such that an inhomogeneous intensity distribution of the light L1 of the first wavelength and/or of the resulting light sheet RLS is achieved in at least parts of the working volume in dependence of the optical properties, particularly the absorption properties, of the photocurable resin 20 and/or possible changes of the optical properties, particularly the absorption properties, of the photocurable resin 20 during the irradiation and 3d-printing process, respectively. Hence, the method can comprise taking into account the optical properties, particularly the absorption properties, of the photocurable resin 20 and/or possible changes of the optical properties, particularly the absorption properties, of the photocurable resin 20 during the irradiation and 3d-printing process, respectively for controlling the intensity distribution of the light of the first wavelength L1 and the plurality of individual light sheets LS1 - LSn, respectively which enables an individual control of the light intensity applied to individual volume elements, such as e.g. voxels, or individual groups of volume elements, such as e.g. groups of voxels, of the photocurable resin 20 and working volume, respectively. A respective individual control of the light intensity applied to individual volume elements, such as e.g. voxels, or individual groups of volume elements, such as e.g. groups of voxels, of the photocurable resin 20 and working volume, respectively can e.g. facilitate printing three-dimensional objects with higher accuracy, for instance.

As such, the method can comprise at least one step of determining the optical properties, particularly the absorption properties, of the photocurable resin 20 and/or possible changes of the optical properties, particularly the absorption properties, of the photocurable resin 20 before, during or after the irradiation and 3d-printing process, respectively. Determining the optical properties, particularly the absorption properties, of the photocurable resin 20 and possible changes of the optical properties, particularly the absorption properties, of the photocurable resin 20 can be facilitated with a determination device (not shown) which can be configured to determine the optical properties, particularly the absorption properties, of the photocurable resin 20 and possible changes of the optical properties, particularly the absorption properties, of the photocurable resin 20. A respective determination device can comprise one or more determination elements, such as sensor elements, particularly acoustic and/or optical sensor elements, which can e.g. be arranged adjacent outside and/or inside the working volume. As an example, respective determination elements can be arranged outside and/or inside the working volume in a distributed manner such that a multi-dimensional determination of the optical properties of the photocurable resin 20 is possible.

Additionally or alternatively, the irradiation device 30 can control the intensity distribution of the light L1 of the first wavelength and/or of the resulting light sheet RLS via the intensity distribution of the plurality of individual light sheets LS1 - LSn, wherein the light L1 of the first wavelength inside the at least one light sheet overlapping zone OZ has a different, particularly a higher, light intensity than the light L1 of the first wavelength outside the at least one light sheet overlapping zone OZ. As indicated above, the at least one light sheet overlapping zone OZ can be or comprise the formation zone FZ in which the photocurable resin 20 is cured so as to form at least a portion of a three-dimensional object to be printed. As such, the intensity of the light L1 of the first wavelength applied to the formation zone FZ and thus, the intensity of the light L1 of the first wavelength inside the formation zone FZ, respectively can be different, particularly higher, than the intensity of the light L1 of the first wavelength applied to regions outside the formation zone FZ and thus, the intensity of the light L1 of the first wavelength outside the formation zone FZ. Hence, the method enables that the intensity of the light L1 of the first wavelength applied to the formation zone FZ, i.e. generally zones in which portions of the three-dimensional object to be printed are formed, can be different, i.e. particularly higher, than the intensity of the light L1 of the first wavelength applied to one or more non-formation zones NFZ (see e.g. Fig. 3, the right diagram, or Fig. 4), i.e. zones in which no portions of the three-dimensional object to be printed are formed and zones of the light sheet overlapping zone OZ where no formation of the three-dimensional object to be printed is intended, e.g. because these zones are not irradiated with the light L2 of the second wavelength or only with a low intensity of the light of the second wavelength. This can result in that the photocurable resin 20 in the formation zone FZ can have a highly active intermediate state, i.e. a high(er) number of photoinitiator molecules of the photocurable resin 20 have been transferred into the intermediate state due to the high(er) intensity of the light L1 of the first wavelength, which typically, results in improved properties of the resulting three-dimensional object.

Additionally or alternatively, the irradiation device 30 can control the intensity distribution of the plurality of individual light sheets LS1 - LSn such that an inhomogeneous intensity distribution of the light L1 of the first wavelength and/or of the resulting light sheet RLS is achieved in at least parts of the working volume, in dependence of the location at which the photocurable resin 20 and the working volume, respectively is irradiated with the light L2 of the second wavelength. Particularly, the irradiation device 30 can control the intensity distribution of the plurality of individual light sheets LS1 - LSn such that the formation zone FZ obtains a higher intensity of the light L1 of the first wavelength than zones outside the formation zone FZ. Applying a higher intensity of the light L1 of the first wavelength to the formation zone FZ can improve the curing properties of the photocurable resin 20 in the formation zone FZ which can improve the properties of the three-dimensional object to be printed for the reasons set forth above.

Additionally or alternatively, the irradiation device 30 can control the intensity distribution of the light L1 of the first wavelength and/or of the resulting light sheet RLS via the intensity distribution of the plurality of individual light sheets LS1 - LSn such that at least one volume element, such as e.g. a voxel, of the formation zone FZ can have a higher light intensity than the average light intensity of the volume elements, such as e.g. voxels, of the non-formation zone (which is, as indicated above, a respective volume of the photocurable resin which does not comprise a part of the three-dimensional object to be printed). Particularly, the irradiation device 30 can control the intensity distribution of the light L1 of the first wavelength and/or of resulting light sheet RLS via the intensity distribution of the plurality of individual light sheets LS1 - LSn such that the average light intensity in the formation zone FZ can be higher than the average light intensity in respective non-formation zones. Hence, the method enables that the intensity of the light L1 of the first wavelength applied to the formation zone FZ, i.e. generally zones in which portions of the three-dimensional object to be printed are formed, is higher than the average intensity of the light L1 of the first wavelength applied to one or more non-formation zones, i.e. zones in which no portions of the three-dimensional object to be printed are formed. This can also result in that the photocurable resin 20 in the formation zone FZ can have a highly active intermediate state, i.e. a high(er) number of photoinitiator molecules of the photocurable resin have been transferred into the intermediate state due to the high(er) intensity of the light of the first wavelength, which typically, results in improved properties of the resulting three-dimensional object.

Additionally or alternatively, the intensity of the light L1 of the first wavelength can be changed, particularly modulated, while irradiating the photocurable resin 20 in the working volume. Changing the intensity of the light L1 of the first wavelength and thus, changing the intensity of the light of one or more respective individual light sheets LS1 - LSn while irradiating the photocurable resin 20 in the working volume can be another means to assign a specific intensity of the light L1 of the first wavelength to specific volume elements of the photocurable resin 20 and thus, supports the approach of the method which comprises assigning individual light intensities to individual volume elements of the photocurable resin 20 and working volume, respectively. Changes of the intensity of the light L1 of the first wavelength can be implemented by a light modulating device, such as e.g. a spatial light modulator, assigned to the irradiation device, for instance.

Fig. 2 particularly, illustrates in the left diagram a light sheet overlapping zone OZ which also completely represents the formation zone FZ, in the middle diagram an alternate light sheet overlapping zone OZ which also completely represents the formation zone FZ, and in the right diagram an upper and a lower light sheet overlapping zone OZ each of which completely represent a formation zone FZ.

Fig. 3 particularly, illustrates in the left diagram a light sheet overlapping zone OZ which also completely represents the formation zone FZ, in the middle diagram an alternate light sheet overlapping zone OZ which also completely represents the formation zone FZ, however in the right diagram an upper light sheet overlapping zone OZ which only partially represents a formation zone FZ but also represents a non-formation zone NFZ and a lower light sheet overlapping zone OZ which also completely represents a formation zone FZ is illustrated.

The arrangements of respective light sheet overlapping zones OZ, formation zones FZ, and non-formation zones NFZ as exemplarily illustrated in Fig. 2 and Fig. 3 require a concerted control of the intensity distribution of the plurality of individual light sheet LS1 - LSn, particularly along the height direction or height extension of a respective individual light sheet LS1 - LSn, such that an inhomogeneous intensity distribution of the resulting light sheet RS is achieved in at least parts of the working volume as contemplated herein.

The exemplary embodiments of Fig. 4-9 show exemplary arrangements of individual light sheets LS1 - LSn which may change during the 3d-printing process.

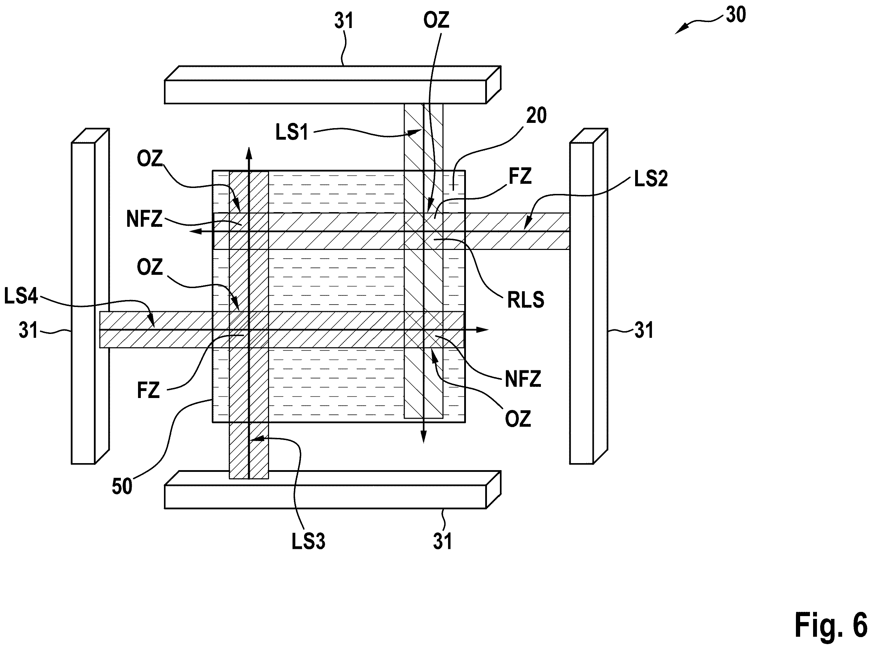

Fig. 6 shows an exemplary arrangement of four individual light sheets LS1 - LS4, wherein a first light LS1 sheet extends at a first angle through the photocurable resin 20, e.g. with respect to a base plane of the working volume or a wall of the container 50 delimiting the working volume, a second light sheet LS2 extends at an angle of essentially 90,° relative to the first light sheet LS1 through the photocurable resin 20, a third light sheet LS3 extends at an angle of essentially 90° relative to the second light sheet LS2 through the photocurable resin 20, and a fourth light sheet LS4 extends at an angle of essentially 90° relative to the third light sheet LS3 through the photocurable resin 20.

Notably, the respective main extension direction of the individual light sheets LS1 - LS4 is indicated by the respective arrows in Fig. 6. These arrows also indicate the direction in which the intensity of respective individual light sheets LS1 - LS4 decreases as the individual light sheets LS1 - L4 propagate through the working volume delimited by container 50. As such, formation zones FZ are given in the portions of the overlapping individual light sheets LS1 - LS4 where the respective individual light sheets LS1 - LS4 still have comparatively higher intensity which correspond to the overlapping portions of individual light sheets LS1 and LS2 and overlapping portions of individual light sheets LS3 and LS4. The overlapping portions of individual light sheets LS1 and LS4 as well individual light sheets LS2 and LS3 are thus, non-formation zones FZ.

Fig. 4 shows another exemplary embodiment which is generally similar to the exemplary embodiment of Fig. 6 but generally indicates how, with multiple individual light sheets LS1 - LSn or respective light stripes multiple formation zones FZ could be generated. In the exemplary embodiment, multiple formation zones FZ are generated, wherein each formation zone FZ has a square-like shape. Particularly, the square-like shaped formation zones FZ are arranged to form a rectangular arrangement. Again, the respective main extension direction of the individual light sheets LS1 - LSn is indicated by the respective arrows. As such, Fig. 4 shows that each first irradiation apparatus 31 of the irradiation device 30 can be configured to emit two individual light sheets or light stripes, particularly in a parallel arrangement. While the exemplary embodiment of Fig. 4 shows that eight individual light sheets LS1 - LSn are generated, the principles specified in connection with Fig. 4 can be implemented with any arbitrary number of light sheets LS1 - LSn.

Fig. 5 shows another exemplary embodiment in which each irradiation apparatus 31 emits individual light sheets each comprising, particularly parallel, light stripes having different intensities. Notably, each of the individual light sheets has an inhomogeneous intensity distribution along the height direction. Particularly, the respective outer light stripes have a higher intensity as the inner light stripes (as exemplarily indicated by different hatching in Fig. 5). In such a manner, multiple formation zones FZ can be generated in the overlapping portions of the respective light stripes of higher intensity which formation zones FZ comprise two, more, or all corners of a rectangle or square, respectively and the edges between respective corners. The other overlapping portions of light stripes thus, represent non-formation zones NFZ. As such, each individual light sheets comprises two light stripes of high intensity and one stripe of lower intensity, resulting in eight formation zones FZ which together represent the shape of a rectangle or square, respectively.

While the exemplary embodiment of Fig. 5 shows that each first irradiation apparatus 31 emits three light stripes, the principles specified in connection with Fig. 5 can be implemented with any arbitrary number of light stripes.

The exemplary embodiments of Fig. 4-6 generally illustrate that the intensity of the light L1 of the first wavelength inside a respective light sheet overlapping zone OZ can be different, particularly higher, than the intensity of the light L1 of the first wavelength outside the respective light sheet overlapping zone OZ.

Even though not shown in the Fig., the irradiation device 30 can also form or generate at least eight individual light sheets, wherein at least a first individual light sheet extends at a first angle through the photocurable resin, e.g. with respect to a base plane of the working volume or a wall of a container delimiting the working volume, a second individual light sheet extends at an angle of 1 - 50, particularly at an angle of essentially 45,° relative to the first individual light sheet through the photocurable resin, a third individual light sheet extends at an angle of 1 - 50°, particularly at an angle of essentially 45°, relative to the second individual light sheet through the photocurable resin, a fourth individual light sheet extends at an angle of 1 - 50° particularly at an angle of essentially 45°, relative to the third individual light sheet through the photocurable resin, a fifth individual light sheet extends at an angle of 1 - 50, particularly at an angle of essentially 45,° relative to the fourth individual light sheet through the photocurable resin, a sixth individual light sheet extends at an angle of 1 - 50°, particularly at an angle of essentially 45°, relative to the fifth individual light sheet through the photocurable resin, a seventh individual light sheet extends at an angle of 1 - 50° particularly at an angle of essentially 45°, relative to the sixth individual light sheet through the photocurable resin, and an eighth individual light sheet extends at an angle of 1 - 50° particularly at an angle of essentially 45°, relative to the seventh individual light sheet through the photocurable resin.

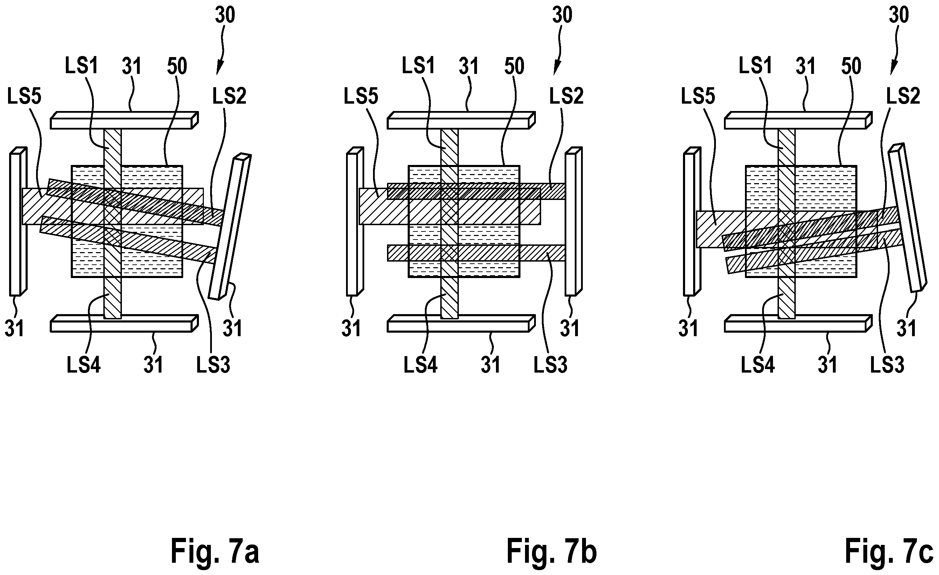

Fig. 7a - 7c shows an exemplary embodiment which illustrates how one or more light sheet overlapping zones OZ can be changed in position and/or size by changing the spatial extension of one or more light sheets relative to one or more other light sheets. Fig. 7a - 7c particularly show that changing the spatial extension of one or more light sheets relative to one or more other light sheets can be achieved by pivoting one or more first irradiation apparatuses 31 or light sources thereof, respectively.

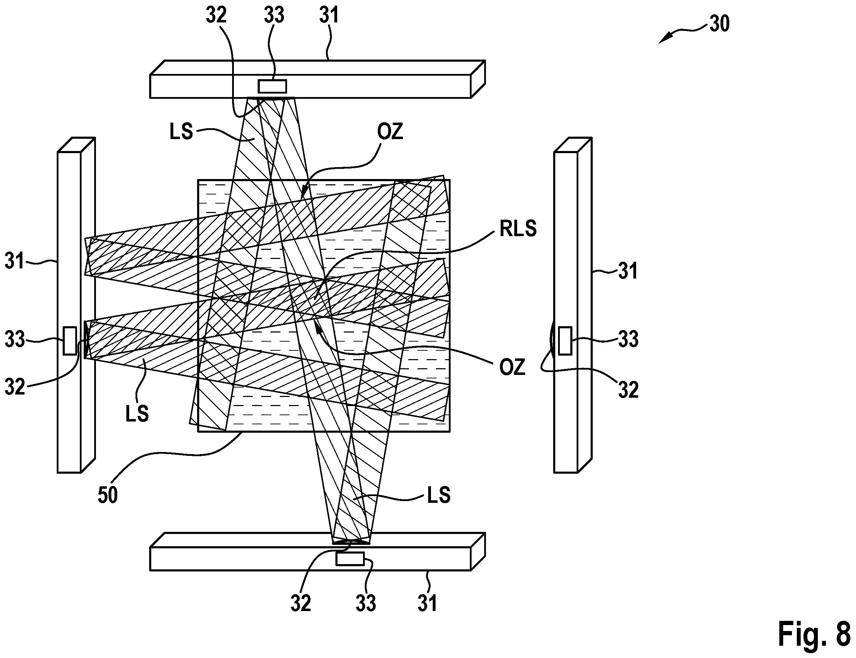

Fig. 8 shows another exemplary embodiment which illustrates how one or more light sheet overlapping zones OZ can be changed in position and/or size by changing the spatial extension of one or more light sheets relative to one or more other light sheets. Fig. 8 particularly shows that changing the spatial extension of one or more individual light sheets LS1 - LSn relative to one or more other light sheets can be achieved by pivoting the light sheets respectively via optical elements 32, such as micro-mirrors, for instance assigned to the first irradiation apparatuses 31 or light sources thereof, respectively. Notably, the intensity between respective individual light sheets LS1 - LSn or respective light stripes or respective light beams can be equally or unequally distributed.

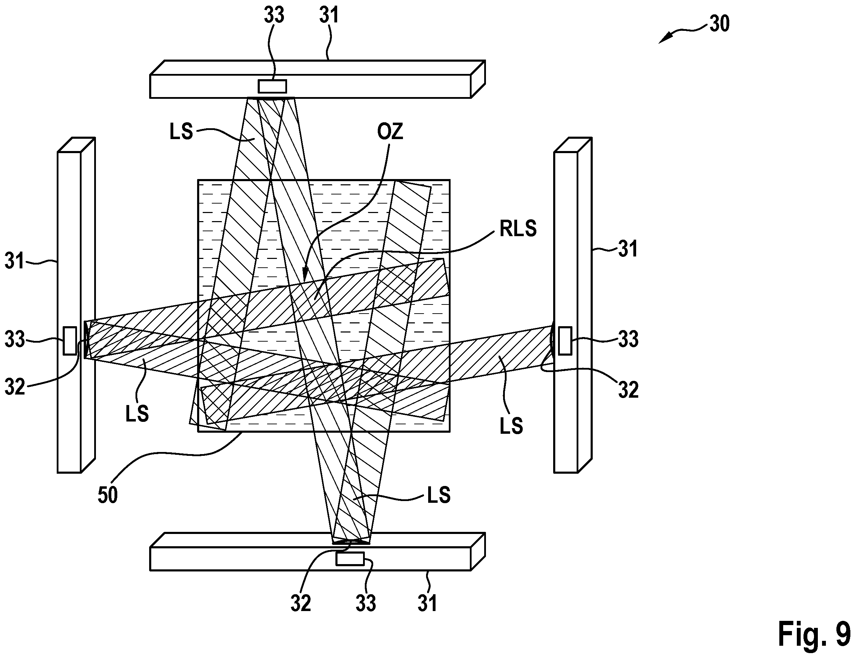

Fig. 9 shows another exemplary embodiment which illustrates how one or more light sheet overlapping zones OZ can be changed in position and/or size by changing the spatial extension of one or more light sheets relative to one or more other light sheets. Fig. 9 particularly shows that a respective light sheet can be generated by dynamically tilting or pivoting a light beam of the light of the first wavelength about a tilting or pivot axis. A respective tilting or pivoting motion of a respective light beam can also be achieved via one or more optical elements, such as micro-mirrors, for instance assigned to the first irradiation apparatuses 31 or light sources thereof, respectively.

Fig. 8 and 9 thus, indicate that at least one individual light sheet of the plurality of individual light sheets LS1 - LSn can be deflected or pivoted by at least one moveable optical element while irradiating the photocurable resin 20 in the working volume. As indicated above, a respective light sheet can comprise one or more light beams of the light L1 of the first wavelength or one or more sets of light beams of the light L1 of the light of the first wavelength. As such, at least one light beam of the light L1 of the first wavelength or at least one set of light beams of the light L1 of the first wavelength can be deflected or pivoted about a deflection axis or pivot axis, respectively while irradiating the photocurable resin 20 in the working volume by at least one moveable optical element 32 which results in that a light sheet is generated which is deflected or pivoted while irradiating the photocurable resin 20 in the working volume. A respective moveable optical element 32 can be or comprise a mirror, particularly a micro-mirror, for instance. A drive device 33, particularly a micro-drive device, can be assigned to the respective moveable optical element. The drive device 33 can be configured to generate a drive force which, particularly reversibly, transfers the respective optical element 32 in a respective deflecting or pivoting motion, particularly between a first orientation and/or position and a second orientation and/or position (as indicated in in Fig. 9). A respective moveable optical element 32 and/or a respective drive device 33 can be or form part of a digital light processing device which can generally comprise a set of chipsets based on optical micro-electro-mechanical technology that uses a digital micromirror device, for instance.

Hence, an irradiation device 30, particularly a respective first irradiation apparatus 31, can be used which comprises at least one digital light processing device or digital micromirror device, respectively comprising a plurality of moveably, particularly pivotably, supported micro-mirrors, wherein at least one of the plurality of moveably supported micro-mirrors is moved, particularly pivoted, while irradiating the photocurable resin in the working volume. As indicated above, operation of the irradiation device and thus, also operation of the at least one digital micromirror device can be controlled by a respective controller.

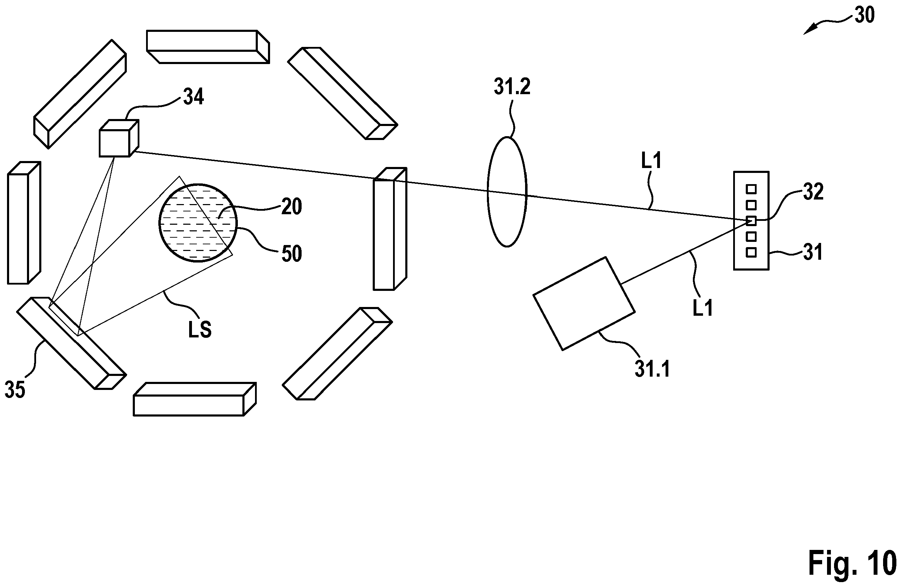

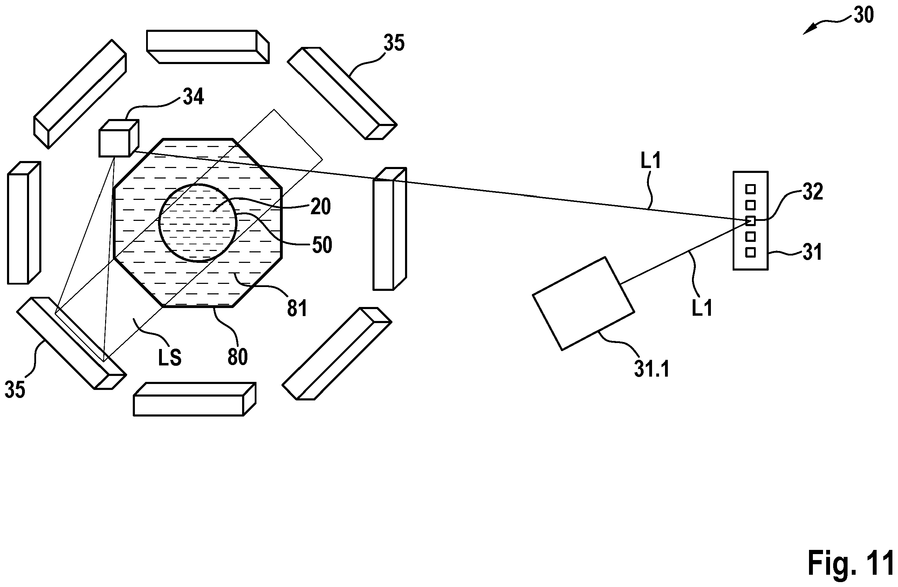

Fig. 10 and 11 show exemplary embodiment, in which an irradiation device 30, particularly a respective first irradiation apparatus 31, is used which comprises at least one beam deflection device 34, such as e.g. a scanner device, particularly a galvanometer scanner device, configured to deflect at least one light beam of the light L1 of the first wavelength towards at least one reflective surface of at least one optical element 35, particularly an optical mirror. As indicated above, operation of the irradiation device 30 and thus, also operation of the beam deflection device 34 can be controlled by a respective controller 40. A respective optical element 35 can be sized and/or shaped such that at least one light beam of the light L1 of the first wavelength which is reflected from its at least one reflective surface towards the working volume covers (substantially) at least the diameter of the working volume. One or more collimating elements, such as e.g. collimating lenses, can be assigned to the at least one optical element 35.

Fig. 10 and 11 specifically show that an irradiation device 30, particularly a respective first irradiation apparatus 31, can be used which comprises at least one beam deflection device 34, such as e.g. a scanner device, particularly a galvanometer scanner device, configured to deflect at least one light beam of the light L1 of the first wavelength towards at least one reflective surface of at least one optical element 35, particularly an optical mirror, of a plurality of optical elements 35 which are arranged around the container 50 and working volume, particularly so as to surround the container 50 and working volume. Each respective optical element 35 can be sized and/or shaped such that at least one light beam of the light L1 of the first wavelength which is reflected from its at least one reflective surface towards the working volume covers (substantially) at least the diameter of the working volume. One or more collimating elements, such as e.g. collimating lenses, can be assigned to each respective optical element.

Notably, Fig. 10 and 11 specifically show that an irradiation device 30, particularly a respective first irradiation apparatus 31, can be used which comprises both at least one digital micromirror device comprising movable optical elements 32 and at least one beam deflection device 34, wherein the at least one digital micromirror device deflects at least one light beam of the light L1 of the first wavelength towards the at least one beam deflection device 34 and the at least one beam deflection device 34 deflects the at least one light beam of the light L1 of the first wavelength towards at least one reflective surface of at least one optical element 35, particularly an optical mirror, such that the light beam of the light L1 of the first wavelength is deflected into the working volume, particularly forming an individual light sheet. Hence, the optical configuration of an irradiation device 30 of the apparatus 10, can comprise a light source of the light L1 of the first wavelength, at least one digital micromirror device comprising a plurality of moveably, particularly pivotably, supported micro-mirrors, wherein at least one of the plurality of moveably supported micro-mirrors is moved, particularly pivoted, while irradiating the photocurable resin 20 in the working volume assigned to the light source, and at least one beam deflection device 34 configured to deflect at least one light beam of the light L1 of the first wavelength towards at least one reflective surface of an optical element 35, particularly an optical mirror, assigned to the at least one beam deflection device 34, for instance.

Fig. 10 and 11 also indicate that at least one individual light sheet of the plurality of individual light sheets LS1 - LSn can be moved, e.g. rotated, about a central axis of the working volume while irradiating the photocurable resin 20 in the working volume at least with the light L1 of the first wavelength. Particularly, at least one individual light sheet of the plurality of individual light sheets LS1 - LSn can be moved, e.g. rotated, at a full rotation about the central axis of the working volume while irradiating the photocurable resin 20 in the working volume at least with the light L1 of the first wavelength. The central axis of the working volume can correspond to a central axis or symmetrical axis of the container 50, for instance. In this exemplary embodiment, the working volume can be stationary, particularly with respect to a rotational motion, during the print which can ease the setup of the volumetric 3d-printing apparatus used for carrying out the method.

Fig. 11 also indicates that the working volume can be defined by a container 50 having a rotationally symmetric shape, wherein the container 50 is arranged within an outer container 80, wherein the outer container 80 comprises a refractive index matching medium 81. Using a container 50 having a rotationally symmetric shape and arranging the container 50 within an outer container 80 which comprises a refractive index matching medium 81 is a measure to avoid possible undesired optical effects, such as e.g. refractive effects, which might compromise the intensity of the light L1 of the first wavelength inside the container 50 and thus, inside the photocurable resin 20. A respective index matching medium can be a fluid having the same or at least a similar refractive index as the wall of the container and/or the photocurable resin.

Fig. 10 and 11 also indicate an exemplary light source 31.1 of the first irradiation apparatus 31 for illustrative purposes. Further, Fig. 10 indicates exemplarily that the optical path of the light L1 of the first wavelength between the light source and the container 50 can comprise one or more optical elements 31.2, such as e.g. lenses, wherein the optical elements 31.2 can serve for purposes of beam collimating, beam focusing, beam widening, etc.

In either embodiment, the method can comprise at least one step of recycling uncured photocurable resin 20 after irradiating the photocurable resin 20 in the working volume. The at least one recycling step can particularly, comprise mixing photocurable resin 20 which has already undergone a 3d-printing process with fresh resin. Since the method enables individually assigning intensities of the light L1 of the first wavelength to individual volume elements of the photocurable resin 20, the amount of photocurable resin 20 which has been irradiated with the light L1 of first wavelength only can be reduced which is beneficial for recycling and reusability purposes because the required amount of fresh photocurable resin 20 to produce a mixture of photocurable resin 20 which is ready for being used in a 3d-printing process can be reduced.

One, more, or all aspects mentioned in connection with at least one embodiment can be combined with one, more, or all aspects mentioned in connection with at least one other embodiment.

## Claims

1. A method for volumetric 3d-printing a three-dimensional object by multi-color photopolymerization of a photocurable resin, which comprises, via at least one irradiation device, irradiating a photocurable resin within a working volume with light of a first wavelength and light of a second wavelength, different from the first wavelength, wherein the light of the first wavelength and the light of the second wavelength intersect in at least one formation zone,
wherein the light of the first wavelength comprises a plurality of individual light sheets extending through the photocurable resin at at least one angle or two different angles relative to each other and overlapping in at least one light sheet overlapping zone, wherein the plurality of individual light sheets form a resulting light sheet,
wherein the irradiation device controls the intensity distribution of the plurality of individual light sheets, particularly along the height direction of a respective individual light sheet, such that an inhomogeneous intensity distribution of the resulting light sheet is achieved in at least parts of the working volume.

2. The method of claim 1, wherein the irradiation device controls the intensity distribution of the plurality of individual light sheets such that an inhomogeneous intensity distribution of the resulting light sheet is achieved in at least parts of the working volume in dependence of the optical properties, particularly the absorption properties, of the photocurable resin and possible changes of the optical properties, particularly the absorption properties, of the photocurable resin during the irradiation.

3. The method of claim 1 or 2, wherein the irradiation device controls the intensity distribution of the resulting light sheet via the intensity distribution of the plurality of individual light sheets, wherein the intensity of the light of the first wavelength inside the at least one light sheet overlapping zone has a different, particularly a higher, light intensity than the light of the first wavelength outside the at least one light sheet overlapping zone, particularly depending from a change of a parameter, e.g. size, shape, position, of the at least one formation zone.

4. The method of any one of the preceding claims, wherein the intensity of the light of the first wavelength inside the formation zone has a different, particularly a higher, light intensity than the light of the first wavelength outside the at least one formation zone.

5. The method of any one of the preceding claims, wherein at least one volume element of the formation zone has a higher light intensity than the average light intensity of the volume elements of a non-formation zone, particularly such that the average light intensity in the at least one formation zone is higher than the average light intensity in the non-formation zone.

6. The method of any one of the preceding claims, wherein the intensity of the light of the first wavelength is changed, particularly modulated, while irradiating the photocurable resin in the working volume, particularly with respect to a parameter, e.g. size, shape, or position, of the at least one formation zone.

7. The method of any one of the preceding claims, wherein the at least one light sheet overlapping zone is or comprises a volume element, particularly a voxel, within the photocurable resin which is to be photocured to form a part of the three-dimensional object to be printed.

8. The method of any one of the preceding claims, wherein at least one individual light sheet comprises at least one light stripe comprising a height extension which is smaller than the respective maximum spatial extension of the working volume in the respective spatial direction.

9. The method of claim 6, wherein the at least one individual light sheet comprises multiple light stripes each comprising a height extension which is smaller than the respective maximum spatial extension of the working volume in the respective spatial direction, wherein the light stripes are generated with a spatial and/or temporal offset.

10. The method of any one of the preceding claims, wherein two, three, four, five, six, seven or eight individual light sheets are generated which extend at a specific angle relative to each other through the photocurable resin and working volume, respectively.

11. The method of any one of the preceding claims, wherein one or more of the plurality of individual light sheets have a main extension plane which is parallel to a bottom wall of a container delimiting the working volume, wherein the bottom wall of the container is preferably transmissive for the light of the first wavelength and/or the second wavelength.

12. The method of any one of the preceding claims, wherein at least one individual light sheet of the plurality of individual light sheets is deflected or pivoted by at least one moveable optical element while irradiating the photocurable resin in the working volume.

13. The method of any one of the preceding claims, wherein at least one individual light sheet of the plurality of individual light sheets is rotated about a central axis of the working volume while irradiating the photocurable resin in the working volume.

14. The method of any one the preceding claims, wherein the working volume is defined by a working container, particularly a working container having a rotationally symmetric shape, wherein the working container is arranged within an outer container, wherein the outer container comprises a refractive index matching medium.

15. The method of any one of the preceding claims, wherein the irradiation device comprises at least one digital micromirror device comprising a plurality of moveably, particularly pivotably, supported micro-mirrors, wherein at least one of the plurality of moveably supported micro-mirrors is moved, particularly pivoted, while irradiating the photocurable resin in the working volume, wherein the at least one digital micromirror device particularly deflects at least one light beam towards the beam deflection device and the at least one beam deflection device deflects at least one light beam towards at least one reflective surface of the at least one optical element, particularly an optical mirror, such that the light beam is deflected into the working volume, particularly forming an individual light sheet; and/or wherein the irradiation device comprises at least one beam deflection device configured to deflect at least one light beam towards at least one reflective surface of an optical element, particularly an optical mirror.

16. Apparatus for volumetric 3d-printing a three-dimensional object by multi-color photopolymerization of a photocurable resin, which comprises at least one irradiation device for irradiating a photocurable resin within a working volume with light of a first wavelength and light of a second wavelength, different from the first wavelength, wherein the light of the first wavelength and the light of the second wavelength intersect in at least one formation zone,
wherein the light of the first wavelength comprises a plurality of individual light sheets extending through the photocurable resin at at least one angle or at least two different angles relative to each other and overlapping in at least one light sheet overlapping zone in which a resulting light sheet comprising the overlapping portions of the plurality of individual light sheets is formed,
wherein the irradiation device is configured to control the intensity distribution of the plurality of individual light sheets, particularly along the height direction of a respective individual light sheet, such that an inhomogeneous intensity distribution of the resulting light sheet is achieved in at least parts of the working volume.
